# EUROPEAN PATENT APPLICATION

(11) **EP 3 975 656 A1**
(43) Date of publication of application: **30.03.2022**
(21) Application number: 20198342.6
(22) Date of filing: 25.09.2020
(51) Int. Cl.: H04W 76/10

(54) **RECONFIGURATION PROCEDURE IN MULTI CONNECTIVITY COMMUNICATION**

(71) Applicant: Nokia Technologies Oy, 02610 Espoo (FI)
(72) Inventor: SELVAGANAPATHY, Srinivasan, 02610 Espoo (FI); ALI, Amaanat, 02610 Espoo (FI); AWADA, Ahmad, 81541 München (DE)
(74) Representative: TBK

(57) **Abstract**

An apparatus for use by a communication network control element or function configured to control a communication of a communication element or function in a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to conduct a conditional secondary cell addition procedure for establishing, in addition to a first communication link to a primary cell being controlled by the communication network control element or function forming a communication path of the communication element or function, a second communication link to a secondary cell, to send, to the communication element or function, a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link.

## Description

### BACKGROUND

### Field

Examples of embodiments relate to apparatuses, methods, systems, computer programs, computer program products and (non-transitory) computer-readable media usable for controlling and conducting a reconfiguration procedure in a multi-connectivity communication, such as a wireless dual connectivity communication in a communication network based on 3GPP standards, and in particular to apparatuses, methods, systems, computer programs, computer program products and (non-transitory) computer-readable media usable for controlling and conducting a conditional reconfiguration procedure for bearers to a primary and secondary cell.

### Background Art

The following description of background art may include insights, discoveries, understandings or disclosures, or associations, together with disclosures not known to the relevant prior art, to at least some examples of embodiments of the present disclosure but provided by the disclosure. Some of such contributions of the disclosure may be specifically pointed out below, whereas other of such contributions of the disclosure will be apparent from the related context.

The following meanings for the abbreviations used in this specification apply:
- 3GPP: 3^{rd} Generation Partnership Project
- 4G: fourth generation
- 5G: fifth generation
- 5GS: 5G system
- ACK: acknowledgement
- AMF: access and mobility management function
- AP: access point
- BS: base station
- CHO: conditional handover
- CN: core network
- CPA: conditional PSCell addition
- CPU: central processing unit
- DAPS: dual active protocol stack
- DC: dual connectivity
- DRB: data radio bearer
- eNB: E-UTRAN NodeB
- ETSI: European Telecommunications Standards Institute
- gNB: next generation node B
- GPRS: general packet radio service
- GRB: guaranteed bit rate
- HO: handover
- ID: identification
- LTE: Long Term Evolution
- LTE-A: LTE Advanced
- MCG: master cell group
- MME: mobility management entity
- MN: master node
- MR: multi RAT
- NF: network function
- NG: new generation
- NW: network, network side
- PCell: primary cell
- PDCP: packet data convergence protocol
- PSCell: primary secondary cell
- QoS: quality of service
- RA: random access
- RACH: random access channel
- RAN: radio access network
- RAT: radio access technology
- RLF: radio link failure
- RLM: radio link monitoring
- RRC: radio resource control
- SCG: secondary cell group
- SGW: serving gateway
- SN: secondary node
- SRB: signaling radio bearer
- UE: user equipment
- UMTS: universal mobile telecommunication system
- UP: user plane
- UPF: user plane function

### SUMMARY

According to an example of an embodiment, there is provided, for example, an apparatus for use by a communication element or function configured to conduct a communication in a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to receive, from a communication network control element or function controlling a primary cell for a first communication link forming a communication path of the communication element or function, configuration information related to a conditional secondary cell addition procedure for establishing, in addition to the first communication link, a second communication link to a secondary cell and to process the configuration information, wherein the configuration information includes a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link, and to conduct the conditional secondary cell addition procedure according to the received configuration information.

Furthermore, according to an example of an embodiment, there is provided, for example, a method for use in a communication element or function configured to conduct a communication in a communication network, the method comprising receiving, from a communication network control element or function controlling a primary cell for a first communication link forming a communication path of the communication element or function, configuration information related to a conditional secondary cell addition procedure for establishing, in addition to the first communication link, a second communication link to a secondary cell and processing the configuration information, wherein the configuration information includes a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link, and conducting the conditional secondary cell addition procedure according to the received configuration information.

According to further refinements, these examples may include one or more of the following features:
- the connection reconfiguration information set may include a first connection reconfiguration setting for the conditional secondary cell addition procedure, wherein the first connection reconfiguration setting is to be applied when the execution condition of the conditional secondary cell addition procedure is determined to be met, and a second connection reconfiguration setting for bearers to be remapped to the second communication link, wherein the second connection reconfiguration setting is different to the first connection reconfiguration setting and is to be applied when the second communication link is established, wherein the first connection reconfiguration setting may be applied when the execution condition of the conditional secondary cell addition procedure is determined to be met, and the second connection reconfiguration setting may be applied when the second communication link is established;
- the second connection reconfiguration setting may be applied, according to the remapping condition controlling the timing for remapping the at least one specified bearer from the first communication link to the second communication link, at one of a point of time immediately after the second communication link is established, a predetermined time after the second communication link is established, a predetermined time after the second communication link is established and a predetermined communication condition is met during the predetermined time, and a point of time when it is determined that a measurement result concerning at least one of the first communication link and the second communication link meets a predetermined value after the second communication link is established;
- the connection reconfiguration information set may include a single connection reconfiguration setting for the conditional secondary cell addition procedure, wherein the single connection reconfiguration setting indicates at least one bearer which is to be maintained at the first communication link when the execution condition of the conditional secondary cell addition procedure is determined to be met and to be remapped to the second communication link when the second communication link is established, wherein the at least one bearer may be maintained at the first communication link when the execution condition of the conditional secondary cell addition procedure is determined to be met and the at least one bearer may be remapped to the second communication link when the second communication link is established;
- the connection reconfiguration information set may include a dual active protocol stack connection reconfiguration setting for bearers to be used for dual active protocol stack operation, wherein the dual active protocol stack connection reconfiguration setting indicates at least one bearer which is to be maintained at the first communication link when the execution condition of the conditional secondary cell addition procedure is determined to be met and to be remapped to the second communication link when the second communication link is established, wherein the at least one bearer may be maintained at the first communication link when the execution condition of the conditional secondary cell addition procedure is determined to be met and the at least one bearer may be remapped to the second communication link when the second communication link is established;
- the at least one bearer may be remapped to the second communication link, according to the remapping condition controlling the timing for remapping the at least one specified bearer from the first communication link to the second communication link, at one of a point of time immediately after the second communication link is established, a predetermined time after the second communication link is established, a predetermined time after the second communication link is established and a predetermined communication condition is met during the predetermined time, and a point of time when it is determined that a measurement result concerning at least one of the first communication link and the second communication link meets a predetermined value after the second communication link is established;
- a first connection reconfiguration complete message indicating that a connection reconfiguration setting is applied when the execution condition of the conditional secondary cell addition procedure is determined to be met may be sent to the communication network control element or function, and a second connection reconfiguration complete message indicating that a connection reconfiguration setting for remapping the at least one specified bearer from the first communication link to the second communication link is applied when the second communication link is established may be sent to the communication network control element or function;
- when a multi-connectivity communication is established in the communication network in which at least two communication links are used to at least two different cells controlled by at least one communication network control element or function, a further connection reconfiguration information set regarding a modification of the first and second communication links may be received from a communication network control element or function controlling the cell to which the first communication link is established, wherein the further connection reconfiguration information set may include information indicating a condition for remapping at least one specified bearer from the first communication link to the second communication link, wherein, as the condition for remapping the at least one specified bearer from the first communication link to the second communication link, it may be detected whether a specified measurement event is met which is associated with a measurement for at least one of the first communication link and the second communication link, and a connection reconfiguration may be applied at the first and second communication links according to the further connection reconfiguration information set when it is detected that the condition is met.

According to an example of an embodiment, there is provided, for example, an apparatus for use by a communication network control element or function configured to control a communication of a communication element or function in a communication network, the apparatus comprising at least one processing circuitry, and at least one memory for storing instructions to be executed by the processing circuitry, wherein the at least one memory and the instructions are configured to, with the at least one processing circuitry, cause the apparatus at least: to conduct a conditional secondary cell addition procedure for establishing, in addition to a first communication link to a primary cell being controlled by the communication network control element or function forming a communication path of the communication element or function, a second communication link to a secondary cell, to send, to the communication element or function, a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link.

Furthermore, according to an example of an embodiment, there is provided, for example, a method for use in a communication network control element or function configured to control a communication of a communication element or function in a communication network, the method comprising conducting a conditional secondary cell addition procedure for establishing, in addition to a first communication link to a primary cell being controlled by the communication network control element or function forming a communication path of the communication element or function, a second communication link to a secondary cell, sending, to the communication element or function, a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link.

According to further refinements, these examples may include one or more of the following features:
- when the second communication link is established, a process for switching at least a part of traffic from the first communication link to a second communication link when a specified condition is met may be conducted, a connection reconfiguration information set regarding the modification of the first and second communication links may be provided to the communication element or function, wherein the connection reconfiguration information set may include information indicating a condition for remapping at least one specified bearer from the first communication link to the second communication link;
- as the condition for remapping the at least one specified bearer from the first communication link to the second communication link, a specified measurement event to be met may be defined which may be associated with a measurement for at least one of the first communication link and the second communication link,;
- alternatively or additionally, when conducting the process for switching at least a part of traffic from the first communication link to the second communication link when a specified condition is met, a modification request for adding at least one bearer to the second communication link may be provided to a second communication network control element or function controlling another cell to which the second communication link is established, the modification request including information indicating the condition for remapping the at least one specified bearer from the first communication link to the second communication link, a response to the modification request may be received from the second communication network control element, and processed, the response including at least one of a measurement result related to the condition for remapping the at least one specified bearer and an indication as to whether the condition is met or not, and, on the basis of the content of the response, it may be decided whether to initiate an immediate activation of a bearer remapping at the communication element or function or to initiate a conditional bearer remapping based on the condition in the connection reconfiguration information.

According to an example of an embodiment, there is provided, for example, an apparatus for use by a communication network control element or function configured to control a multi-connectivity communication of a communication element or function in a communication network in which at least two communication links are used to at least two different cells at least one of which being controlled by the communication network control element or function and to which a second communication link being established, the apparatus comprising at least one processing circuitry, and at least one memory for storing instructions to be executed by the processing circuitry, wherein the at least one memory and the instructions are configured to, with the at least one processing circuitry, cause the apparatus at least: to conduct a process for switching at least a part of traffic from a first communication link to the second communication link when a specified condition is met, to obtain, from a first communication network control element or function controlling another cell to which the first communication link is established, and process a modification request for adding at least one bearer to the second communication link, the modification request including information indicating the condition for remapping the at least one specified bearer from the first communication link to the second communication link, wherein the process includes at least one of conducting a measurement on the second communication link related to the condition for remapping the at least one specified bearer and checking whether the condition is met or not, and to send, to the first communication network control element or function, a response to the modification request, the response including a result of the process.

In addition, according to embodiments, there is provided, for example, a computer program product for a computer, including software code portions for performing the steps of the above defined methods, when said product is run on the computer. The computer program product may include a computer-readable medium on which said software code portions are stored. Furthermore, the computer program product may be directly loadable into the internal memory of the computer and/or transmittable via a network by means of at least one of upload, download and push procedures.

### BRIEF DESCRIPTION OF THE DRAWINGS

Some embodiments of the present disclosure are described below, by way of example only, with reference to the accompanying drawings, in which:
Fig. 1 shows a diagram illustrating an example of a communication network in which examples of embodiments are implementable;
Fig. 2 shows a signaling diagram explaining an example of a CHO procedure in a communication network;
Fig. 3 shows a signaling diagram explaining an example of a CPA procedure in a communication network;
Fig. 4 shows a signaling diagram explaining an example of an SN addition procedure in a communication network;
Fig. 5 shows a signaling diagram explaining an example for a CPA procedure according to an example of an embodiment;
Fig. 6 shows a signaling diagram explaining an example for a CPA procedure according to an example of an embodiment;
Fig. 7 shows a flow chart of a process conducted in a communication network control element or function acting as MN according to some examples of embodiments;
Fig. 8 shows a flow chart of a process conducted in a communication element or function according to some examples of embodiments;
Fig. 9 shows a diagram of a network element or function representing a communication network control element or function acting as MN according to some examples of embodiments;
Fig. 10 shows a diagram of a network element or function representing a communication element or function according to some examples of embodiments;
Fig. 11 shows a signaling diagram explaining an example of an SN modification procedure in a communication network;
Fig. 12 shows a signaling diagram explaining an example for an SN modification procedure according to an example of an embodiment;
Fig. 13 shows a flow chart of a process conducted in a communication network control element or function acting as MN according to some examples of embodiments;
Fig. 14 shows a flow chart of a process conducted in a communication element or function according to some examples of embodiments;
Fig. 15 shows a flow chart of a process conducted in a communication network control element or function acting as SN according to some examples of embodiments;
Fig. 16 shows a diagram of a network element or function representing a communication network control element or function acting as MN according to some examples of embodiments;
Fig. 17 shows a diagram of a network element or function representing a communication element or function according to some examples of embodiments; and
Fig. 18 shows a diagram of a network element or function representing a communication network control element or function acting as SN according to some examples of embodiments.

### DESCRIPTION OF EMBODIMENTS

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is obvious for a person skilled in the art that the embodiments may also be applied to other kinds of communication networks, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as communication elements, user devices or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station (BS), an gNB, a radio network controller, a core network control element or function, such as a gateway element, or other network elements or functions, as described herein, and any other elements, functions or applications may be implemented by software, e.g. by a computer program product for a computer, and/or by hardware. For executing their respective processes, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

Basically, for properly establishing and handling a communication between two or more endpoints (e.g. communication stations or elements, such as terminal devices, user equipments (UEs), or other communication network elements, a database, a server, host etc.), one or more network elements or functions (e.g. virtualized network functions), such as communication network control elements or functions, for example access network elements like access points, radio base stations, relay stations, eNBs, gNBs etc., and core network elements or functions, for example control nodes, support nodes, service nodes, gateways, user plane functions, access and mobility functions etc., may be involved, which may belong to one communication network system or different communication network systems.

Dual connectivity concepts, such as multi radio DC, are used to increase the performance of communication networks. A multiple Rx/Tx capable UE may be configured to use resources provided by two different nodes connected via (non-ideal) backhaul, one providing e.g. NR access and the other one providing either E-UTRA or NR access, for example. One node acts as a master node (MN) and the other as a secondary node (SN). The MN and SN are connected, for example, via a network interface and at least the MN is connected to the core network.

The MN is the node (e.g. a radio access node, such as a gNB or the like) that provides the control plane connection to the core network in case of multi radio dual connectivity. The SN is, for example, a radio access node, with no control plane connection to the core network, providing additional resources to the UE in case of DC. It is also possible that both primary and secondary cell are controlled by the same node, i.e. that one network node acts as both MN and SN.

A master cell group (MCG) is a group of serving cells associated with the MN, comprising of the primary cell (PCell) and optionally one or more secondary cells (SCells).

A secondary cell group (SCG), on the other hand, is a group of serving cells associated with the SN, comprising of a primary secondary cell (PSCell) and optionally one or more SCells. MCG is the group which the UE considers as the primary radio link, wherein the PCell is the cell in which the uplink control channel is configured and also the radio link of this cell is considered for radio link monitoring.

It is to be noted that the MN and/or the SN can be operated with shared spectrum channel access.

In MR-DC, for example, there is an interface between the MN and the SN for control plane signalling and coordination. For each MR-DC UE, there is also one control plane connection between the MN and a corresponding CN entity. The MN and the SN involved in MR-DC for a certain UE control their radio resources and are primarily responsible for allocating radio resources of their cells.

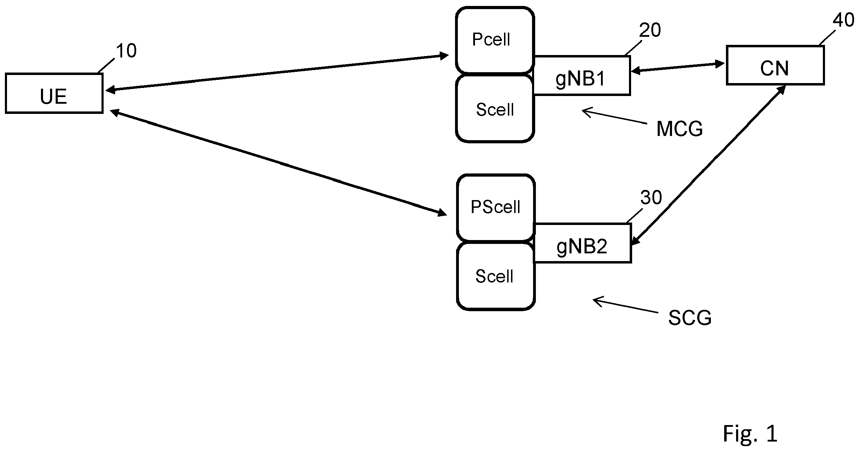

Fig. 1 shows a diagram illustrating an example of a communication network involving MR-DC. It is to be noted that the network architecture shown in Fig. 1 is configured to implement also examples of embodiments to be described below.

As shown in Fig. 1, a communication element such as a UE 10 establishes a dual connectivity based communication connection with a communication network. In the communication network, in the example indicated in Fig. 1, two communication network control elements or functions are located each of which representing a network node with which the UE 10 can communicate. In the example of Fig. 1, gNBs 20 and 30 are shown, but it is to be noted that the number of communication network control elements as well as the type (e.g. other access network elements, such as eNBs, base stations etc.) which can be used is not limited to the example depicted in Fig. 1 and can be varying.

Furthermore, in Fig. 1, a core network CN 40 is depicted which is connected to each of the communication network control elements or functions 20, 30 for control purposes. The core network comprises different nodes or functions, depending on the respective architecture, such as NR or 4G architecture. Examples of nodes included in the CN 40 are an AMF, UPF in NR network or SGW, MME in 4G networks, wherein also other nodes can be involved, as known by those skilled in the art.

Each of the communication network control elements or functions 20, 30 controls one or more cells (in the example shown in Fig. 1, two cells per gNB are shown, but the number may be different). In the example shown in Fig. 1, it is assumed that the communication element or function UE 10 is configured to simultaneously connect to the gNB20 and gNB 30 (i.e., dual connectivity (DC)). That is, the UE 10 in the DC may perform a transmission/reception via both the gNB20 and gNB 30. For example, the UE 10 may receive packets from the gNB 20 at a first carrier frequency and the gNB 30 at a second carrier frequency, or the UE 10 may transmit packets to the gNB 20 at a first carrier frequency and the gNB 30 at a second carrier frequency. In addition, one of the gNBs (in Fig. 1, gNB 20) represent the MN, wherein the cell with which the UE 10 is connected is the PCell, while the other gNB 30 is the SN, wherein the cell with which the UE 10 is connected is a PSCell. That is, gNB 20 forms MCG, while gNB 30 forms SCG, in the situation illustrated in Fig. 1. The first carrier frequency and the second carrier frequency may or may not be overlapped.

It is to be noted that the system configuration and communication path indicated in Fig. 1 represents only an example for illustrative purposes. It is evident that also other system configurations and communication paths can be applied in a similar manner.

In order to improve mobility robustness of communication network operations, several concepts are developed. One of these concepts is conditional handover (CHO). CHO is defined as a handover that is executed by the UE when one or more handover execution conditions are met. The UE starts evaluating the execution condition(s) upon receiving the CHO configuration, and stops evaluating the execution condition(s) once a handover is executed (legacy handover or conditional handover execution).

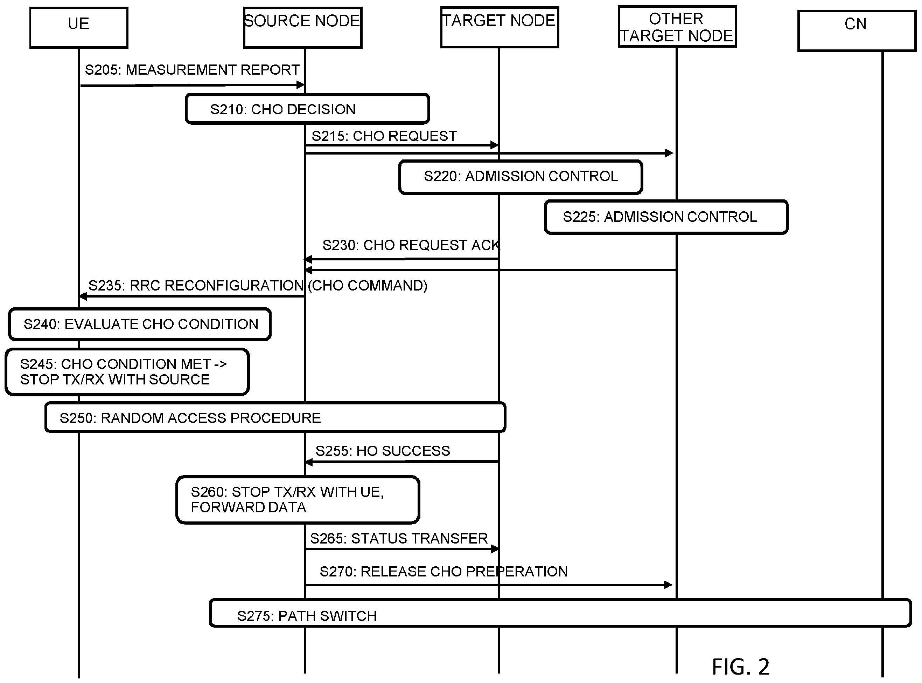

Fig. 2 shows a signaling diagram explaining an example of a CHO procedure in a communication network.

In S205, a configured event triggers the UE to send a measurement report regarding signaling quality to network to a source node, i.e. the node to which it is currently connected. On the basis of this report, the source node makes in S210 a decision to use CHO. Thus, the source node prepares one or more target cells for the handover. For this, in S215, the source node sends a CHO Request to one or more candidate target nodes. Each candidate target node conducts a process regarding admission control of the CHO request (S220 and S225), wherein as a result thereof a respective CHO Request Acknowledge message is returned by the target nodes being prepared to participate in the CHO in S230.

In S235, the source node sends an RRC reconfiguration message to the UE having sent the measurement report which includes a CHO command. The RRC configuration message in S235 includes also the configuration of CHO candidate cell(s) and CHO execution condition(s).

The UE maintains connection with the source node after receiving the CHO configuration, and starts in S240 evaluating the CHO execution conditions for the candidate cell(s).

When at least one CHO candidate cell satisfies the corresponding CHO execution condition in S245, the UE detaches from the source gNB, i.e. it stops the TX/RX operation with the source node, and applies the configuration for the selected candidate cell. In S250, the UE conducts a random access procedure with the selected target node so as to synchronize to that candidate cell. The target node sends in S255 a handover success message so as to complete the handover procedure.

In S260, the source node stops TX/RX operation with the UE and forwards data for the UE to the target node. Furthermore, in S265, a status transfer message is sent to the target node.

It is to be noted that the UE can release stored CHO configurations after successful completion of RRC handover procedure. Furthermore, the source node may send in S270 an indication to other candidate target cells so as to release CHO preparation.

In S275, path switch is completed in the network.

In contrast to a baseline handover procedure, where the UE will immediately access the target cell to complete the handover as soon as the handover command is received, in CHO, the UE will only access the target cell once an additional CHO execution condition expires. In other words, the HO preparation and execution phases are decoupled.

The advantage of the CHO is that the HO command can be sent very early, when the UE is still safe in the source cell, without risking the access in the target cell and the stability of its radio link. Thus, conditional handover provides improved mobility robustness.

When a multi-connectivity communication, such as a DC communication, is established, SN addition procedure is initiated by the MN and used to establish a UE context at the SN to provide resources from the SN to the UE. For bearers requiring SCG radio resources, this procedure is used to add at least the first cell of the SCG. This procedure can also be used to configure an SN terminated MCG bearer (where no SCG configuration is needed)

Another concept being developed for communication networks in order to improve performance is referred to as conditional PSCell addition (CPA). CPA allows to enhance the PSCell addition (SN addition) procedure and reduces the latency to add an SCG by providing the UE proactively with the CPA configuration (MCG & SCG configurations) along with an execution condition for applying the configuration. That is, a similar concept as in case of CHO is applied for SN addition. When the execution condition is met, the UE applies the provided CPA configuration and performs access to the prepared SCG.

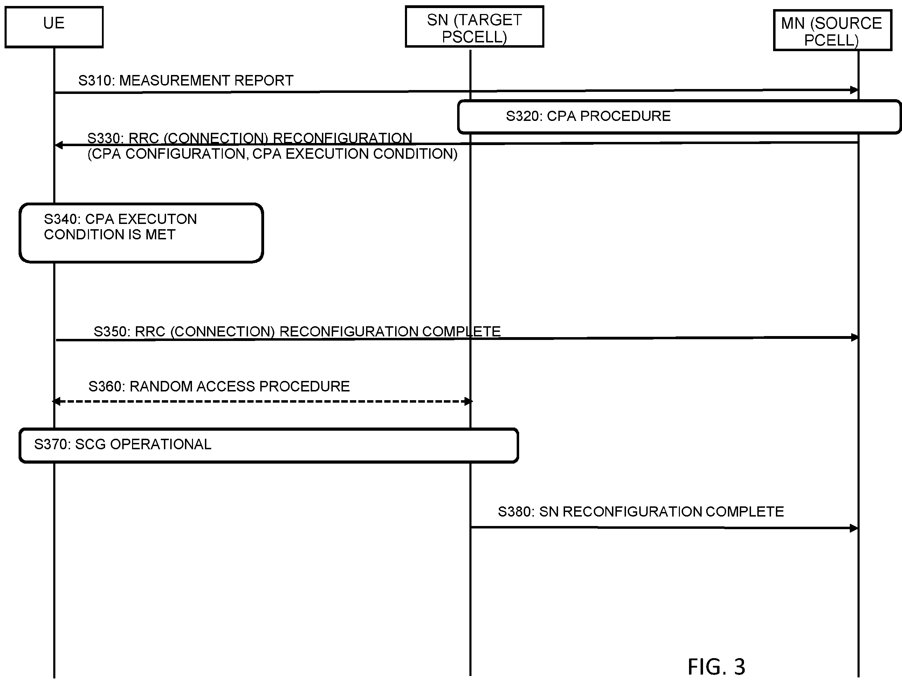

Fig. 3 shows a signaling diagram explaining an example of a CPA procedure in a communication network.

In S310, the UE sends a measurement report to the MN. In S320, after having received the measurements from the UE, the source PCell in MN prepares at least one target PSCell in SN.

In S330, the source PSCell (i.e. MN) provides the UE with 1) CPA configuration information comprising MCG and SCG configuration that is prepared by target PSCell, and 2) a CPA execution condition.

In S340, it is determined that the CPA execution condition is met. Then, the UE applies the CPA configuration and performs access to the new target PSCell. For example, in S360, a random access procedure is conducted with the SN, resulting, in S370, in that the SCG is operational. Furthermore, the UE replies in S350 with RRC Reconfiguration Complete to MN in response to the message in S330.

In S380, the SN informs the MN that the SN reconfiguration is completed.

However, it has been found that during an SN addition or CPA procedure combined with a SCG or MCG bearer remapping an interruption of traffic flow or a user data provision may occur.

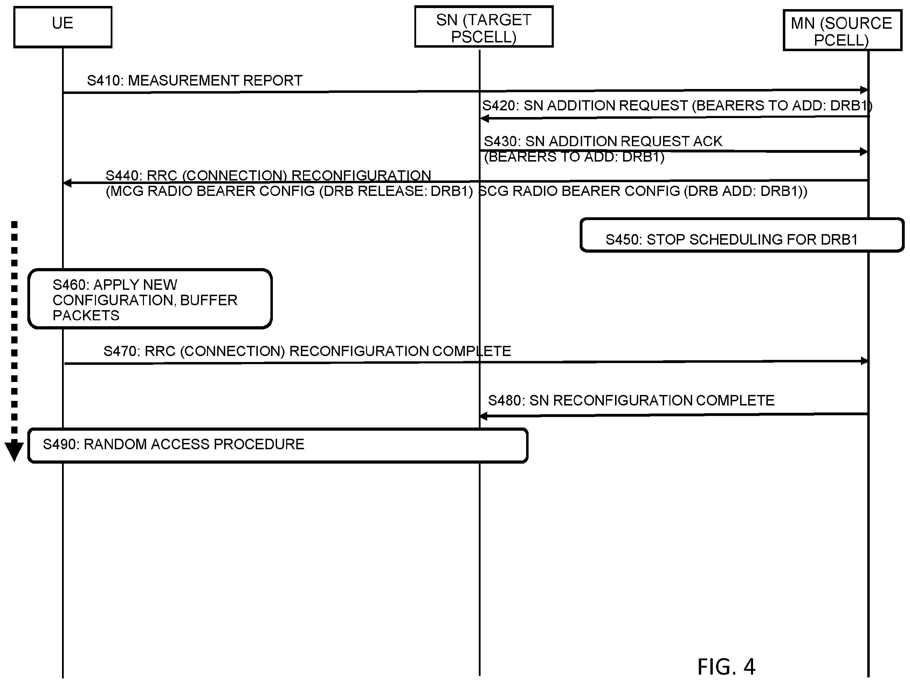

Fig. 4 shows a signaling diagram explaining an example of an SN addition procedure in a communication network for showing this situation.

After receiving a measurement report from the UE in S410, the MN decides to request the SN to allocate resources for a specific bearer, for example. Therefore, an SN addition request is sent in S420 to a SN controlling a target PSCell which includes an indication of a bearer to be added (here DRB1).

When the SN is able to admit the resource request, it allocates respective radio resources and decides the PSCell. Then, the SN provides the new SCG radio resource configuration to the MN in SN addition request acknowledge message in S430.

In S440, the MN sends to the UE an RRC connection reconfiguration message including MCG radio bearer configuration (i.e. to release the DRB1 to MCG) and SCG radio bearer configuration (i.e. to add DRB1 to SCG).

In S450, the MN stops scheduling for DRB1. On the other hand, in S460, the UE applies the new configuration including the change or remapping of the bearer DRB1 to SCG, i.e. it releases DRB1 at MCG and adds DRB1 at SCG. During this, the UE buffers packets of DRB1 for the SCG.

In S470, the UE sends a RRC connection reconfiguration complete message to the MN. The MN informs the SN that the UE has completed the reconfiguration procedure by sending a SN reconfiguration complete message in S480.

Furthermore, in S490, the UE and the SN conduct a random access procedure for synchronization towards PSCell of SN. It is to be noted that the process in S470 and S490 can be executed in parallel, i.e. at the same time, or time shifted.

As described above, the SCG addition procedure involves also bearer remapping operation. It may include changes of MCG bearer to split bearers, releasing of MN terminated MCG bearers and creating SN terminated SCG bearers. In case if the MCG bearers having GBR requirements need to be offloaded to SN as part of the SN-addition procedure (or as part of the RRC reconfiguration sent towards UE), a DRB-ID is released at MCG and same DRB ID is added at SCG.

The UE and the MN stop the MCG DRB operation and remaps it to SCG after UE completes the SCG access with the target cell. This operation involves some interruption for these bearers.

If MCG bearer is remapped as SCG bearer as part of SN Addition procedure, the traffic flow corresponding to this bearer is interrupted from S450 to S490 (indicated by the dashed arrow in Fig. 4). This interruption time is also applicable when SN addition procedure is modified as conditional SN addition procedure (CPA) where the SN addition is triggered by the UE when CPA execution condition is met (see S340 of Fig. 3).

It is conceivable to avoid this interruption time by different approaches. For example, in case the bearers to be offloaded have interruption time requirements, these bearers will not be remapped along with SCG addition procedure. Instead, the MN triggers another SN modification procedure (and RRC-Reconfiguration) after successful SN-Addition procedure. Alternatively, MN may configure the bearers as split bearers as part of SN addition procedure and later on modify them as SN terminated SCG bearer. This method involves additional signaling procedure (RRC Reconfiguration) after SCG-addition procedure.

That is, the above discussed approaches require additional RRC signaling messages. Furthermore, the overall delay in offloading the traffic from MCG to SCG is increased. For CPA, a main objective is to offload the traffic from MCG to SCG while keeping signaling load and delay involved in SCG addition as low as possible.

Therefore, according to examples of embodiments, a reconfiguration procedure in a multi-connectivity communication is proposed where a conditional reconfiguration procedure for bearers to a primary and secondary cell can be achieved while traffic flow interruption is avoided and signaling load is minimized.

Specifically, when a conditional secondary cell addition procedure e.g. CPA is conducted the UE is provided by the MN with a connection reconfiguration information set regarding which includes information indicating an execution condition of the CPA and information indicating a remapping condition controlling a timing for remapping at specified bearers from the first communication link to the second communication link.

According to examples of embodiments, in a first option, the MN provides, in addition to first reconfiguration information indicating a configuration that is associated with conditional PSCell addition (CPA), 1) a second conditional reconfiguration related to bearer remapping along with the first reconfiguration information and 2) a condition when to apply the second conditional reconfiguration.

For example, the second conditional reconfiguration is to be applied once the random access (RACH) access to the newly added SN, using the first configuration, is completed. Furthermore, according to another example, the second conditional reconfiguration is applied after some time duration from accessing successfully the SN.

Alternatively, the second conditional reconfiguration is applied when a condition, considering e.g. radio measurements of MN and/or SN, is met.

As a second option, the MN indicates to the UE, e.g. in the reconfiguration information, 1) the bearer-IDs which are released in MCG and added in SCG for delayed remapping and 2) a condition on when to apply the delayed remapping for the indicated bearer-IDs. In this case, the MN provides only one RRC reconfiguration for CPA. However, the MN includes an additional condition for switching the bearers that are indicated for delayed remapping.

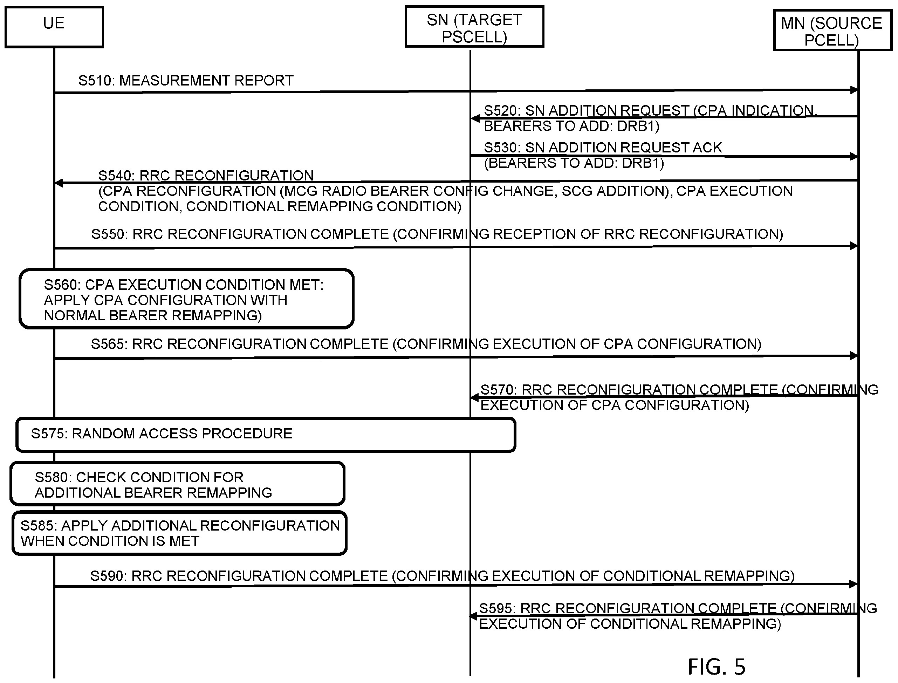

With regard to Fig. 5, which shows a signaling diagram explaining a procedure regarding a CPA execution according to an example of an embodiment, there is described a process according to the above indicated first option.

After receiving a measurement report from the UE in S510, the MN decides to request the SN to allocate resources for a specific bearer, for example. Therefore, an SN addition request is sent in S520 to SN controlling a target PSCell which includes an indication of a bearer to be added (here DRB1) and an indication that a CPA procedure is executed.

When the SN is able to admit the resource request, it allocates respective radio resources and decides the PSCell. Then, the SN provides the new SCG radio resource configuration to the MN in SN addition request acknowledge message in S530.

In S540, the MN sends to the UE an RRC connection reconfiguration message. The RRC reconfiguration signaling which contains, as described above, a conditional reconfiguration for CPA, includes two RRC Reconfiguration messages containing the first and second configurations. The first configuration is to be applied when the CPA execution condition is met. The second configuration is to be applied based on an additional condition which is separate from the CPA execution condition. In the present example, the RRC reconfiguration message comprises a CPA configuration including MCG radio bearer configuration change indication and SCG addition indication, the CPA execution condition indication and a conditional remapping condition indication. In other words, the RRC Reconfiguration message includes CPA-configuration (MCG radio bearer configuration change, SCG Addition), CPA execution condition, Conditional-Remapping (bearer remapping) and Conditional Remapping condition (such as SCG access and timer for SCG RLM). As also indicated above, in the present example, there will be two conditions and two reconfigurations in the RRC Reconfiguration message carrying CPA.

In S550, the UE confirms reception of the RRC reconfiguration by sending an RRC reconfiguration complete message to the MN.

When the CPA execution condition is met in S560, the UE applies the first RRC reconfiguration included in the CPA configuration. For the bearers released as part of this configuration, the UE releases PDCP and stops the bearer activity in MCG. The pending packets are buffered for the bearer remapped to SCG waiting for SCG Access to complete (i.e. for bearers being handled as in the conventional manner). On the other hand, for the bearers not remapped in this configuration, traffic via MCG continues for the time being.

In S565, the UE sends, for example, an RRC reconfiguration complete message by means of which it confirms the execution of the CPA configuration. It is to be noted that as an alternative example, corresponding information can be also embedded in an uplink information transfer MRDC message, for example, The MN informs the SN in S570 that the UE has completed the RRC reconfiguration with regard to the execution of the CPA configuration.

In S575, the UE and the SN (PSCell) conduct a random access procedure for synchronization.

On SCG Access completion, in S580, the UE checks for the condition to be applied for the second reconfiguration, i.e. for the condition to conduct the additional bearer remapping.

In S585, when the condition for bearer remapping is met (e.g. one of the time periods indicated above), the UE applies the additional reconfiguration. When the additional reconfiguration contains bearer remapping, the UE stops transmission/reception from MCG and starts transmission/reception via SCG immediately for the remapped bearers.

In S590, the UE sends a (further) RRC reconfiguration complete message (or corresponding information embedded in an uplink information transfer MRDC message) to the MN so as to indicate successful application of the second reconfiguration. The MN informs the SN in S595 that the UE has completed the RRC reconfiguration with regard to the execution of the conditional bearer remapping.

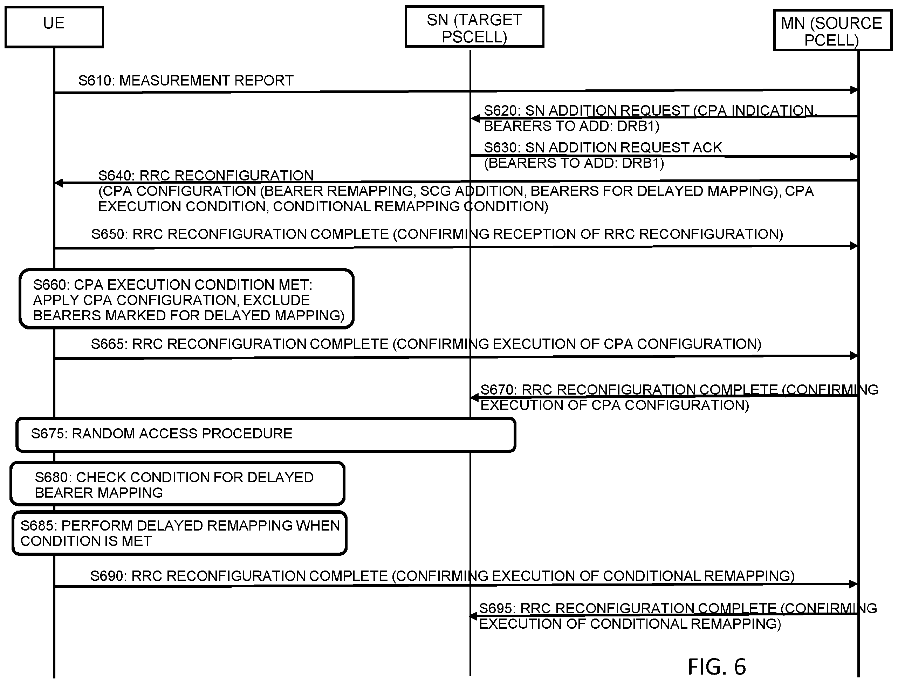

With regard to Fig. 6, which shows a signaling diagram explaining an alternative procedure regarding a CPA execution according to an example of an embodiment, there is described a process according to the above indicated second option.

Similar to Fig. 5, in Fig. 6, after receiving a measurement report from the UE in S610, the MN decides to request the SN to allocate resources for a specific bearer, for example. Therefore, an SN addition request is sent in S620 to SN controlling a target PSCell which includes an indication of a bearer to be added (here DRB1) and an indication that a CPA procedure is executed.

When the SN is able to admit the resource request, it allocates respective radio resources and decides the PSCell. Then, the SN provides the new SCG radio resource configuration to the MN in SN addition request acknowledge message in S630.

In S640, the MN sends to the UE an RRC connection reconfiguration message. However, different to the procedure of Fig. 5, in S640, the MN sends instead of two RRC reconfiguration messages, a single RRC reconfiguration for CPA with additional information indicating selected bearers where the release in MCG and addition in SCG is deferred until an additional condition for bearer remapping is met (e.g. when SCG access is completed). Hence, in the present example, the RRC reconfiguration message comprises a CPA configuration including bearer remapping indication, SCG addition indication and an identification of bearers for a delayed mapping, the CPA execution condition indication and a conditional remapping condition indication.

In S650, the UE confirms reception of the RRC reconfiguration by sending an RRC reconfiguration complete message to the MN.

When the CPA execution condition is met in S660, the UE applies the RRC reconfiguration included in the CPA configuration. However, the bearers being indicated to be delayed for remapping are excluded in the presently (or initially) conducted bearer remapping process.

In S665, the UE sends RRC reconfiguration complete message (or corresponding information embedded in an uplink information transfer MRDC message) by means of which it confirms the execution of the CPA configuration. The MN informs the SN in S670 that the UE has completed the RRC reconfiguration with regard to the execution of the CPA configuration.

In S675, the UE and the SN (PSCell) conduct a random access procedure for synchronization.

On SCG Access completion, in S680, the UE checks for the condition applied for the delayed bearer remapping.

In S685, when the condition for bearer remapping is met (e.g. one of the time periods indicated above), the UE performs the delayed remapping of the bearers being specified accordingly in the reconfiguration information.

In S690, the UE sends a (further) RRC reconfiguration complete message (or corresponding information embedded in an uplink information transfer MRDC message) to the MN so as to indicate successful execution of the conditional remapping of bearers. The MN informs the SN in S695 that the UE has completed the RRC reconfiguration with regard to the execution of the conditional bearer remapping.

It is to be noted that even though a single RRC reconfiguration message is associated with CPA configuration, the UE may send two RRC reconfiguration complete messages where the first indicates the successful CPA reconfiguration and the second indicating incremental bearer mapping changes.

According to further examples of embodiments, as an alternative reconfiguration procedure in a multi-connectivity communication where a conditional reconfiguration procedure for bearers to a primary and secondary cell can be achieved while traffic flow interruption is avoided and signaling load is minimized, a dual active protocol stack (DAPS) capability of the UE for Interruption free bearer remapping is employed.

DAPS refers to a handover procedure also known as enhanced make-before-break handover. Specifically, DAPS is used for reducing a handover interruption time. This is achieved by maintaining the source cell radio link (including data flow) while establishing the target cell radio link.

According to the present examples of embodiments, in case the UE is DAPS capable, the network (such as the MN) is configured to detect this and to configure the bearers which are remapped for DAPS operation during the conditional reconfiguration. In this case, the UE starts DAPS operation between the PDCP of released bearer of MCG and added bearer of SCG on receiving the bearer release /addition with DAPS indication.

Then, the UE continues the source DAPS operation via source MCG until the SCG access is completed. It is to be noted that compared to bearer release and add mechanism, DAPS enables the PDCP operation without PDCP re-establishment.

When the UE sends RRC reconfiguration complete on a successful SCG access, the UE indicates implicitly to release the source protocol stack of the DAPS operation. The network (i.e. MN, for example) is able to release the source protocol stack operation on receiving this indication.

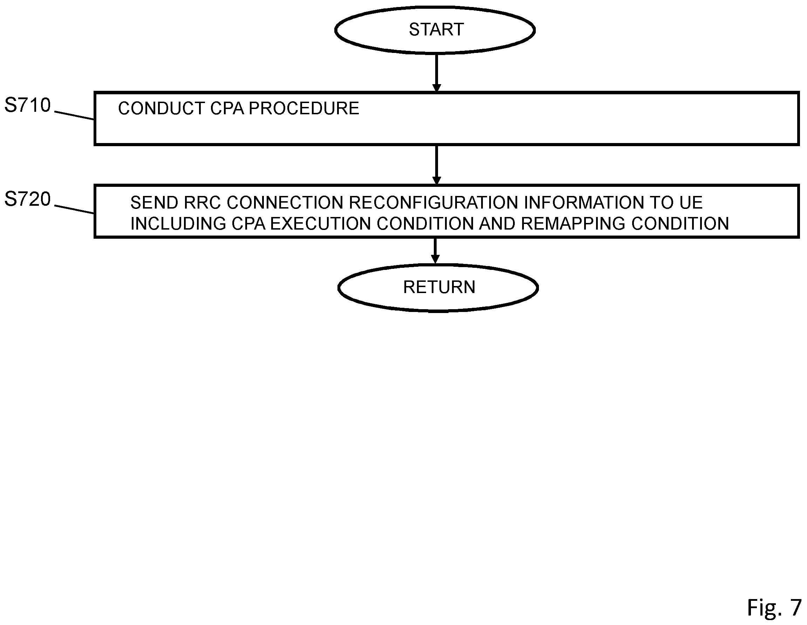

Fig. 7 shows a flow chart of a process executed by a communication network control element or function acting as MN, such as gNB 20 of Fig. 1, as described in the examples of Figs. 5 and 6. That is, Fig. 7 shows a flowchart related to a process conducted by a communication network control element or function, such as the gNB 20,

As also indicated above, the communication network may be based on a 3GPP standard. However, also other communication standards can be used, according to other examples of embodiments.

In S710, a conditional secondary cell addition procedure (e.g. a CPA procedure) for establishing, in addition to a first communication link to a primary cell (PCell) being controlled by the communication network control element or function (i.e. the MN) forming a communication path of communication element or function communicating in the network, a second communication link to a secondary cell is conducted.

In S720, the MN sends to the communication element or function a connection reconfiguration information set regarding the establishment of the second communication link. The connection reconfiguration information set includes information indicating an execution condition of the conditional secondary cell addition procedure and information indicating a remapping condition controlling a timing for remapping at least one specified bearer from the first communication link to the second communication link.

According to some examples of embodiments, such as described in connection with Fig. 5, there are included, in the connection reconfiguration information set, a first connection reconfiguration setting for the conditional secondary cell addition procedure, wherein the first connection reconfiguration setting is to be applied when the execution condition of the conditional secondary cell addition procedure is determined to be met, and a second connection reconfiguration setting for bearers to be remapped to the second communication link. The second connection reconfiguration setting is different to the first connection reconfiguration setting and is to be applied when the second communication link is established. That is, two reconfiguration settings are provided.

According to examples of embodiments, the remapping condition controlling the timing for remapping the at least one specified bearer from the first communication link to the second communication link defines as the timing when the second connection reconfiguration setting is to be applied, one of a point of time immediately after the second communication link is established, a predetermined time after the second communication link is established, a predetermined time after the second communication link is established and a predetermined communication condition is met during the predetermined time, and a point of time when it is determined that a measurement result concerning at least one of the first communication link and the second communication link meets a predetermined value after the second communication link is established. That is, the additional bearer remapping using the second reconfiguration can be applied at different timings.

On the other hand, according to examples of embodiments, the connection reconfiguration information set includes a single connection reconfiguration setting for the conditional secondary cell addition. The single connection reconfiguration setting indicates at least one bearer which is to be maintained at the first communication link when the execution condition of the conditional secondary cell addition procedure is determined to be met and to be remapped to the second communication link when the second communication link is established. That is, there is indicated at least one bearer (or a list of bearers) whose remapping is to be delayed until a specified condition is met.

According to examples of embodiments, the remapping condition controlling the timing for remapping the at least one specified bearer from the first communication link to the second communication link defines as the timing when the least one bearer is to be remapped to the second communication link one of a point of time immediately after the second communication link is established, a predetermined time after the second communication link is established, a predetermined time after the second communication link is established and a predetermined communication condition is met during the predetermined time, and a point of time when it is determined that a measurement result concerning at least one of the first communication link and the second communication link meets a predetermined value after the second communication link is established. That is, the delayed bearer remapping using the list of bearers being indicated can be applied at different timings.

Furthermore, according to some examples of embodiments, it may be determined whether to not the communication element or function has a dual active protocol stack capability. If this is the case, a dual active protocol stack connection reconfiguration setting for bearers to be used for dual active protocol stack operation is included in the connection reconfiguration information set. The dual active protocol stack connection reconfiguration setting indicates at least one bearer which is to be maintained at the first communication link when the execution condition of the conditional secondary cell addition procedure is determined to be met and to be remapped to the second communication link when the second communication link is established.

Again, according to some examples of embodiments, the remapping condition controlling the timing for remapping the at least one specified bearer from the first communication link to the second communication link defines as the timing when the least one bearer is to be remapped to the second communication link one of a point of time immediately after the second communication link is established, a predetermined time after the second communication link is established, a predetermined time after the second communication link is established and a predetermined communication condition is met during the predetermined time, and a point of time when it is determined that a measurement result concerning at least one of the first communication link and the second communication link meets a predetermined value after the second communication link is established.

Moreover, according to some examples of embodiments, a first connection reconfiguration complete message indicating that a connection reconfiguration setting is applied when the execution condition of the conditional secondary cell addition procedure is determined to be met is received from the communication element or function and processed. Moreover, a second connection reconfiguration complete message indicating that a connection reconfiguration setting for remapping the at least one specified bearer from the first communication link to the second communication link is applied when the second communication link is established is received from the communication element or function and processed.

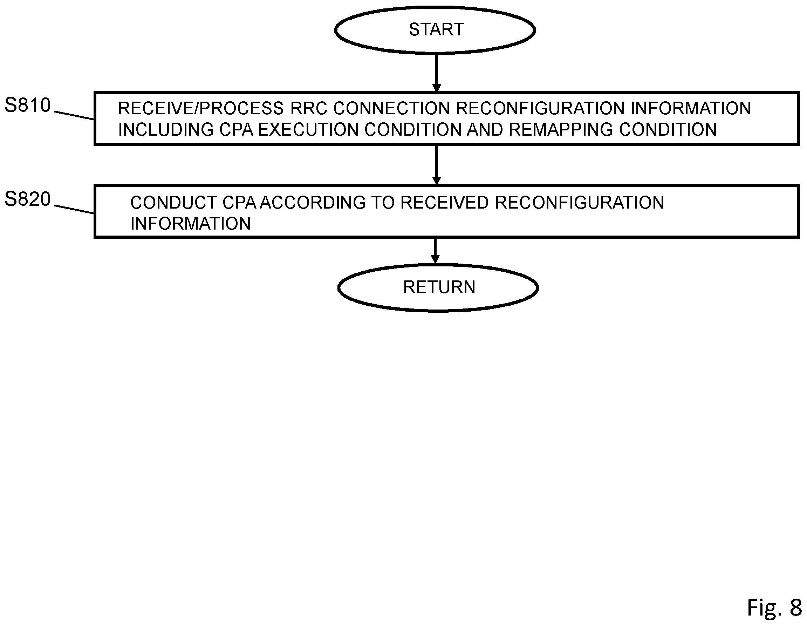

Fig. 8 shows a flow chart of a process executed by a communication element or function, such as UE 10 of Fig. 1, as described in the examples of Figs. 5 and 6. That is, Fig. 8 shows a flowchart related to a process conducted by a communication element or function, such as the UE 10, configured to conduct a communication in a communication network.

As also indicated above, the communication network may be based on a 3GPP standard. However, also other communication standards can be used, according to other examples of embodiments.

In S810, the UE receives from a communication network control element or function (e.g. MN) controlling a primary cell (PCell) for a first communication link forming a communication path of the UE, configuration information related to a conditional secondary cell addition procedure (e.g. a CPA procedure) for establishing, in addition to the first communication link, a second communication link to a secondary cell, and processed the same.

According to examples of embodiments, the configuration information includes a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link.

Then, in S820, the UE conducts the conditional secondary cell addition procedure (e.g. the CPA procedure) according to the received configuration information.

For example, according to some examples of embodiments, as described above in connection with Fig. 5, the connection reconfiguration information set includes a first connection reconfiguration setting for the conditional secondary cell addition procedure, wherein the first connection reconfiguration setting is to be applied when the execution condition of the conditional secondary cell addition procedure is determined to be met. Furthermore, the connection reconfiguration information set includes a second connection reconfiguration setting for bearers to be remapped to the second communication link, wherein the second connection reconfiguration setting is different to the first connection reconfiguration setting and is to be applied when the second communication link is established. That is, two reconfiguration settings are provided.

Then, the process in S820 includes to apply the first connection reconfiguration setting when the execution condition of the conditional secondary cell addition procedure is determined to be met, and to apply the second connection reconfiguration setting when the second communication link is established.

According to some examples of embodiments, the second connection reconfiguration setting is applied, according to the remapping condition controlling the timing for remapping the at least one specified bearer from the first communication link to the second communication link, at one of a point of time immediately after the second communication link is established, a predetermined time after the second communication link is established, a predetermined time after the second communication link is established and a predetermined communication condition is met during the predetermined time, and a point of time when it is determined that a measurement result concerning at least one of the first communication link and the second communication link meets a predetermined value after the second communication link is established.

That is, the additional bearer remapping using the second reconfiguration can be applied at different timings.

On the other hand, according to some examples of embodiments, as also discussed in connection with Fig. 6, the connection reconfiguration information set includes a single connection reconfiguration setting for the conditional secondary cell addition procedure. The single connection reconfiguration setting indicates at least one bearer which is to be maintained at the first communication link when the execution condition of the conditional secondary cell addition procedure is determined to be met and to be remapped to the second communication link when the second communication link is established. That is, there is indicated at least one bearer (or a list of bearers) whose remapping is to be delayed until a specified condition is met.

In this case, the process in S820 includes to maintain the at least one bearer at the first communication link when the execution condition of the conditional secondary cell addition procedure is determined to be met and to remap the at least one bearer to the second communication link when the second communication link is established.

According to some further examples of embodiments, the at least one bearer (i.e. according to the list of bearers) is remapped to the second communication link, according to the remapping condition controlling the timing for remapping the at least one specified bearer from the first communication link to the second communication link, at one of a point of time immediately after the second communication link is established, a predetermined time after the second communication link is established, a predetermined time after the second communication link is established and a predetermined communication condition is met during the predetermined time, and a point of time when it is determined that a measurement result concerning at least one of the first communication link and the second communication link meets a predetermined value after the second communication link is established. That is, the delayed bearer remapping using the list of bearers being indicated can be applied at different timings.

Furthermore, according to some examples of embodiments, when the communication element or function has a dual active protocol stack capability, the connection reconfiguration information set can include a dual active protocol stack connection reconfiguration setting for bearers to be used for dual active protocol stack operation.

The dual active protocol stack connection reconfiguration setting indicates at least one bearer which is to be maintained at the first communication link when the execution condition of the conditional secondary cell addition procedure is determined to be met and to be remapped to the second communication link when the second communication link is established.

Then, the process in S820 includes to maintain the at least one bearer at the first communication link when the execution condition of the conditional secondary cell addition procedure is determined to be met and to remap the at least one bearer to the second communication link when the second communication link is established.

Again, the at least one bearer to the second communication link can be remapped, according to the remapping condition controlling the timing for remapping the at least one specified bearer from the first communication link to the second communication link, at one of a point of time immediately after the second communication link is established, a predetermined time after the second communication link is established, a predetermined time after the second communication link is established and a predetermined communication condition is met during the predetermined time, and a point of time when it is determined that a measurement result concerning at least one of the first communication link and the second communication link meets a predetermined value after the second communication link is established.

Moreover, according to some examples of embodiments, the UE to sends to the communication network control element or function (i.e. the MN) a first connection reconfiguration complete message indicating that a connection reconfiguration setting is applied when the execution condition of the conditional secondary cell addition procedure is determined to be met. Furthermore, the UE sends to the communication network control element or function (i.e. the MN) a second connection reconfiguration complete message indicating that a connection reconfiguration setting for remapping the at least one specified bearer from the first communication link to the second communication link is applied when the second communication link is established.

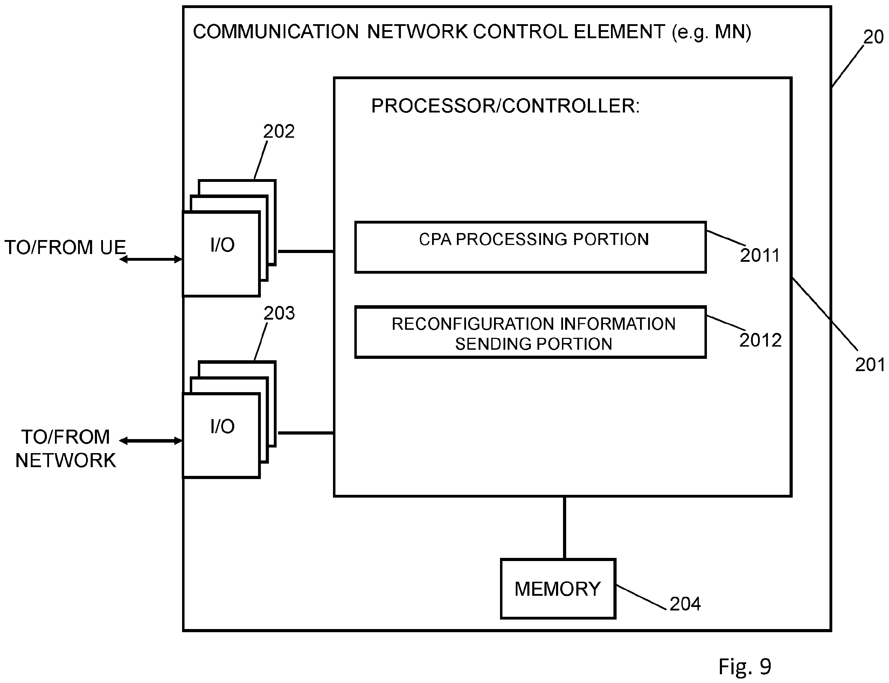

Fig. 9 shows a diagram of a network element or function representing a communication network control element or function acting as MN, such as gNB1 20, according to some examples of embodiments, as described in connection with Figs. 1, 5 and 6, which is configured to conduct a control of a multi-connectivity communication of a communication element or function in a communication network according to examples of embodiments of the disclosure. It is to be noted that the network element or function, like the gNB may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The communication network control element or function 20 shown in Fig. 9 may include a processing circuitry, a processing function, a control unit or a processor 201, such as a CPU or the like, which is suitable for executing instructions given by programs or the like related to the control procedure. The processor 201 may include one or more processing portions or functions dedicated to specific process as described below, or the process may be run in a single processor or processing function. Portions for executing such specific process may be also provided as discrete elements or within one or more further processors, processing functions or processing portions, such as in one physical processor like a CPU or in one or more physical or virtual entities, for example. Reference sign 202 and 203 denote input/output (I/O) units or functions (interfaces) connected to the processor or processing function 201. The I/O units 202 may be used for communicating with a communication element or function, such as UE 10. The I/O units 203 may be used for communicating with network parts located on the communication network (e.g. other gNBs, the core network etc.). The I/O units 202 and 203 may be combined units including communication equipment towards several entities, or may include a distributed structure with a plurality of different interfaces for different entities. Reference sign 204 denotes a memory usable, for example, for storing data and programs to be executed by the processor or processing function 201 and/or as a working storage of the processor or processing function 201. It is to be noted that the memory 204 may be implemented by using one or more memory portions of the same or different type of memory.

The processor or processing function 201 is configured to execute a process related to the above described control process. In particular, the processor or processing circuitry or function 201 includes at least one or more of the following sub-portions. Sub-portion 2011 is a processing portion which is usable as a portion for conducting a conditional secondary cell addition procedure such as a CPA process. The portion 2011 may be configured to perform a process according to S710 of Fig. 7. Furthermore, the processor or processing circuitry or function 201 may include a sub-portion 2012 usable as a portion for sending reconfiguration information. The portion 2012 may be configured to perform a process according to S720 of Fig. 7.

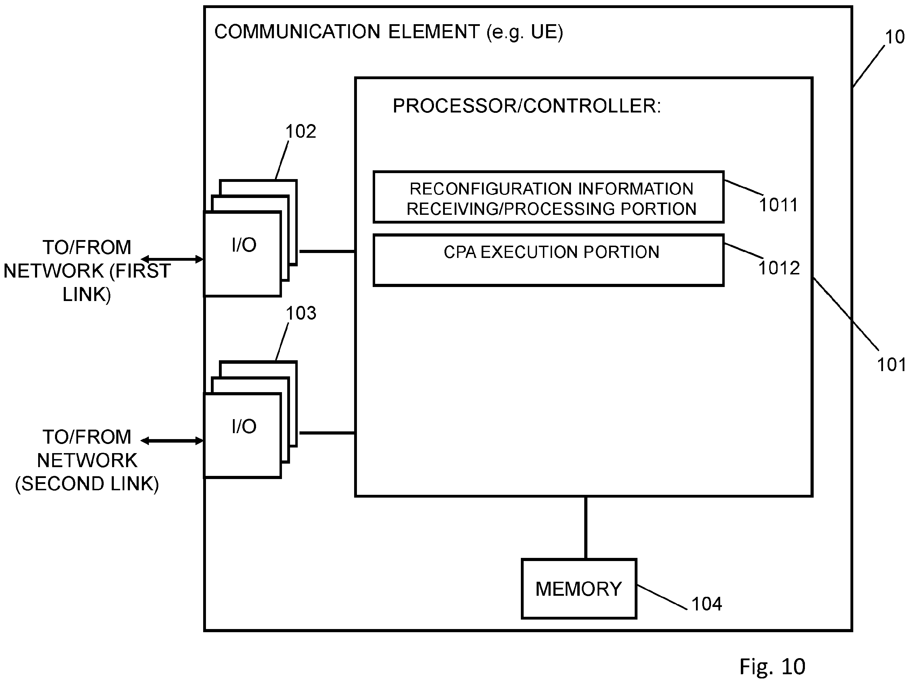

Fig. 10 shows a diagram of a communication element or function, such as UE 10, according to some examples of embodiments, as described in connection with Figs. 1, 5 and 6, which is configured to conduct a multi-connectivity communication according to examples of embodiments of the disclosure. It is to be noted that the network element or function, like the UE 10, may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The communication element or function 10 shown in Fig. 10 may include a processing circuitry, a processing function, a control unit or a processor 101, such as a CPU or the like, which is suitable for executing instructions given by programs or the like related to the control procedure. The processor 101 may include one or more processing portions or functions dedicated to specific processes as described below, or the process may be run in a single processor or processing function. Portions for executing such specific process may be also provided as discrete elements or within one or more further processors, processing functions or processing portions, such as in one physical processor like a CPU or in one or more physical or virtual entities, for example. Reference sign 102 and 103 denote input/output (I/O) units or functions (interfaces) connected to the processor or processing function 101. The I/O units 102 may be used for communicating with the communication network via a first communication link (e.g. to PCell, as shown in Fig. 1, for example). The I/O units 103 may be used for communicating with the communication network via a second communication link (e.g. to PSCell, as shown in Fig. 1, for example). The I/O units 102 and 103 may be combined units including communication equipment towards several entities, or may include a distributed structure with a plurality of different interfaces for different entities. Reference sign 104 denotes a memory usable, for example, for storing data and programs to be executed by the processor or processing function 101 and/or as a working storage of the processor or processing function 101. It is to be noted that the memory 104 may be implemented by using one or more memory portions of the same or different type of memory.

The processor or processing function 101 is configured to execute processes related to the above described control process. In particular, the processor or processing circuitry or function 101 includes one or more of the following sub-portions. Sub-portion 1011 is a processing portion which is usable as a portion for receiving and processing reconfiguration information. The portion 1011 may be configured to perform a process according to S810 of Fig. 8. Furthermore, the processor or processing circuitry or function 101 may include a sub-portion 1012 usable as a portion for executing a conditional secondary cell addition procedure such as a CPA process. The portion 1012 may be configured to perform a process according to S820 of Fig. 8.

While in the above described examples of embodiments a case has been considered where when a multi-connectivity communication, such as a DC communication, is established, an SN addition procedure is initiated by the MN, there is also the case where there is already an established DC communication connection but where communication conditions, such as radio conditions, or a changed load situation and the like, make it necessary for the network to offload traffic (i.e. bearers or QoS flows) from one cell group to another, e.g. from MCG to SCG. This is conducted, for example, by using a SN modification procedure.

Basically, the SN modification procedure may be initiated either by the MN or by the SN, e.g. upon request from the core network, and be used to modify, establish or release bearer contexts or QoS flows, to transfer bearer contexts to and from the SN or to modify other properties of the UE context within the same SN. For example, the MN uses the procedure to initiate configuration changes of the SCG within the same SN, e.g. the addition, modification or release of SCG bearer(s) and the SCG RLC of split bearer(s), as well as configuration changes for SN terminated MCG bearers. Bearer termination point change is realized by adding the new bearer configuration and releasing the old bearer configuration within a single MN initiated SN modification procedure for the respective bearer.

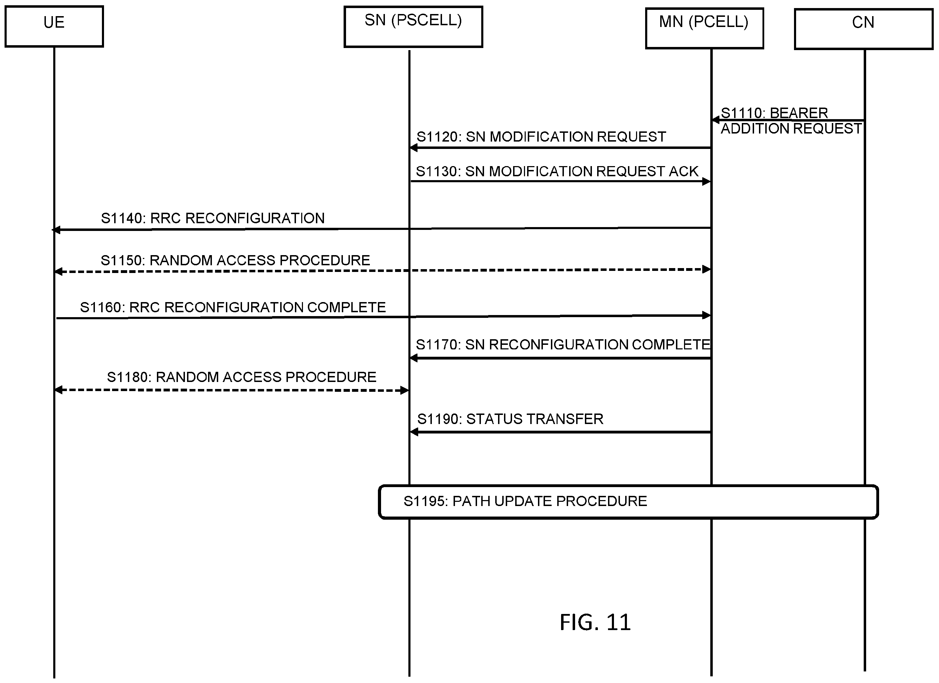

Fig. 11 shows a signaling diagram explaining an example of an SN modification procedure in a communication network which is e.g. based on that described in connection with Fig. 1.

In S1110, the MN receives from the CN an indication, e.g. in the form of a NG AP message, indicating that a new bearer addition or QoS flow addition has to be considered.

In S1120, the MN sends a SN modification request message to the SN which is already involved in the DC communication. For example the SN modification messages comprises bearer context related or other UE context related information, data forwarding address information (if applicable) and the requested SCG configuration information.

In S1130, the SN responds with a SN modification request acknowledge message, which comprises e.g. SCG radio resource configuration information within a RRC configuration message and data forwarding address information (if applicable).

In S1140, the MN initiates RRC connection reconfiguration procedure. In S1150, the UE applies the new configuration, synchronizes to the MN (e.g. by a random access procedure), and replies in S1160 with a RRC connection reconfiguration complete message to the MN.

Upon successful completion of the reconfiguration, In S1170, the MN indicates the success of the procedure in SN reconfiguration complete message to the SN.

In S1180, if instructed, the UE performs synchronisation towards the PSCell of the SN by random access procedure.

In S1190, e.g. when the PDCP termination point is changed for bearers, SN status transfer takes place between the MN and the SN (for example, a bearer context is transferred from the MN to the SN).

Furthermore, in S1195, a path update is performed.

However, when bearers or QoS flows are offload e.g. on the basis of a radio condition of cell groups, the following may occur. For example, the MN may decide to offload to SN some of the bearers if the QoS requirements of these bearers need some minimum radio condition that is no longer satisfied in MN or is satisfied in SN. For this, the MN needs to receive SCG measurement before triggering the remapping procedure with the SCG, e.g. over Xn (using SCG modification request and response) and sending the RRC reconfiguration to the UE for the bearer remapping. In this case, however, the SN modification procedure as discussed in connection with Fig. 11 involves signaling overhead and delay that are associated with measurement reporting and triggering of the SN modification procedure.

Therefore, according to examples of embodiments, a SN modification procedure is proposed which allows to reduce signaling overhead and reduce delay in the SN modification procedure.

According to examples of embodiments, when a SN modification procedure for a UE already having dual connectivity with MN and SN is conducted, the MN provides a conditional RRC reconfiguration containing only bearer remapping or an SN related modification that is applied by the UE only when a certain condition is met.

For example, according to examples of embodiments, a condition indicating that the SN related modification is to be applied by the UE can be a measurement event that is associated with PCell or PSCell. According to another embodiment, the condition can be associated with two measurement events: one measurement event associated with PCell and another measurement event associated with PSCell.

Once the condition is met, the UE applies the conditional RRC modification containing bearer remapping configuration.

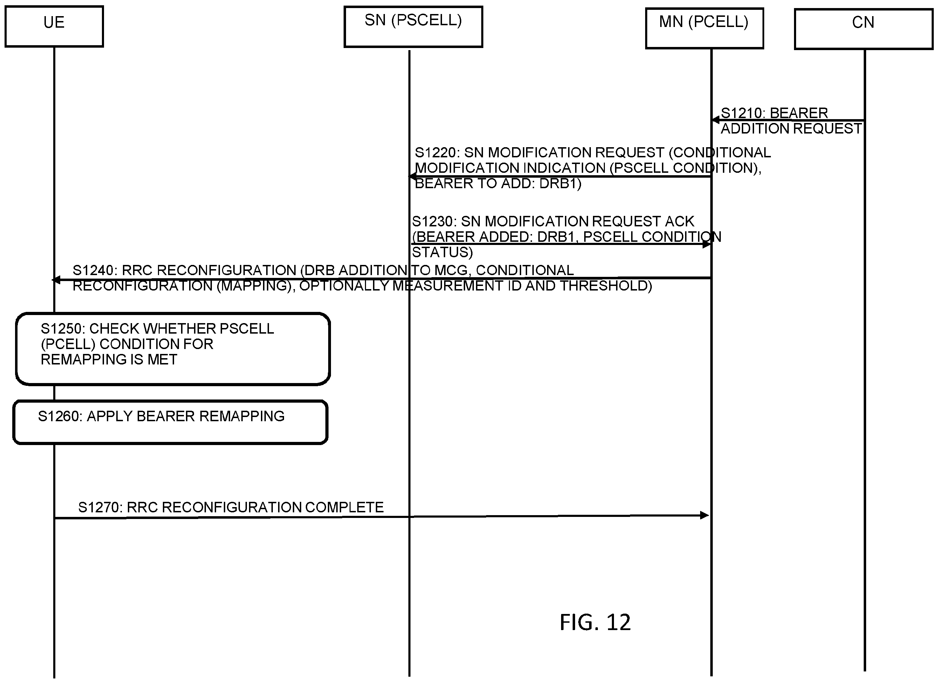

Fig. 12 shows a signaling diagram explaining an example for an SN modification procedure according to an example of an embodiment in which in particular differences compared to existing procedures related to RRC reconfiguration for bearer remapping are explained.

In S1210, the MN receives from the CN an indication, e.g. in the form of a NG AP message, indicating that a new bearer addition or QoS flow addition has to be considered. According to the present example of embodiments, when a new bearer (or QoS flow) addition is requested from the core network (e.g. the AMF), the MN first adds the bearer to the MCG. Then, the MN triggers the SN modification request including PSCell condition for applying the reconfiguration for the SCG modification.

That is, in S1220, when the MN send the SN modification request, according to an example of embodiment, as part of the request, a conditional modification indication is provided which refers to the PSCell condition. Moreover, the bearer(s) to be added is identified (here bearer DRB1).

In S1230, the SN responds with a SN modification request acknowledge message. As part of this SCG modification response, according to an example of an embodiment, the SN sends the latest measurement result of PSCell for the MN. Alternatively, according to an example of embodiment, the SN includes an indication whether the PSCell condition is met or not (i.e. whether PSCell condition status is met or not).

This information provided in the signaling in S1230 is used for assist the MN to take a decision regarding bearer remapping. For example, the MN can decide to immediately activate of the bearer remapping, which is basically the procedure as indicated in connection with Fig. 11, i.e. any specific condition may not be applied. This is the case, for example, when the measurement results in the possibility to immediately change bearers. That is, in case an immediate activation can be configured, the MN sends a normal RRC reconfiguration signaling which adds the new bearer to SCG by using the procedure as described in connection with Fig. 11, for example.

Alternatively, on the basis of the information received in S1230, the MN decides on a conditional activation of bearer remapping by using conditional reconfiguration procedure.

In the latter case, in S1240, the MN triggers the conditional reconfiguration for bearer-remapping. For this purpose, the MN conducts a conditional RRC connection reconfiguration procedure wherein an RRC reconfiguration message including an indication regarding an addition of a bearer to MCG, an indication regarding conditional reconfiguration (i.e. MCG bearer remapping, SCG bearer remapping) is included.

It is to be noted that according to examples of embodiments, the conditional reconfiguration can be mapped to measurement ID and/or a condition associated with serving PCell and/or PSCell radio link measurements (which is different to CHO/CPC procedures where conditions are based only on the measurements of target PCell /PSCells). For this purpose, for example, the signaling in S1240 can comprise also one more measurement IDs, (i.e. a measurement ID 1 being related to a measurement value of the PCell being smaller that a first threshold, and/or a measurement ID 2 being related to a measurement value of the PSCell being greater that a second threshold).

In S1260, the UE checks whether the PSCell condition and/or PCell condition (whichever being configured in the reconfiguration information) for bearer remapping is/are met, e.g. on the basis of measurement results and the comparison with thresholds, as indicated above.

In case the condition is determined to be met, in S1260, the UE applies the new configuration (synchronizes to the SN), and replies in S1270 with RRC connection reconfiguration complete message to the MN indicating that the conditional modification is executed successfully.

After sending the RRC reconfiguration complete message in S1270, the further process is similar to that described in Fig. 11, so that a further explanation thereof is omitted here.

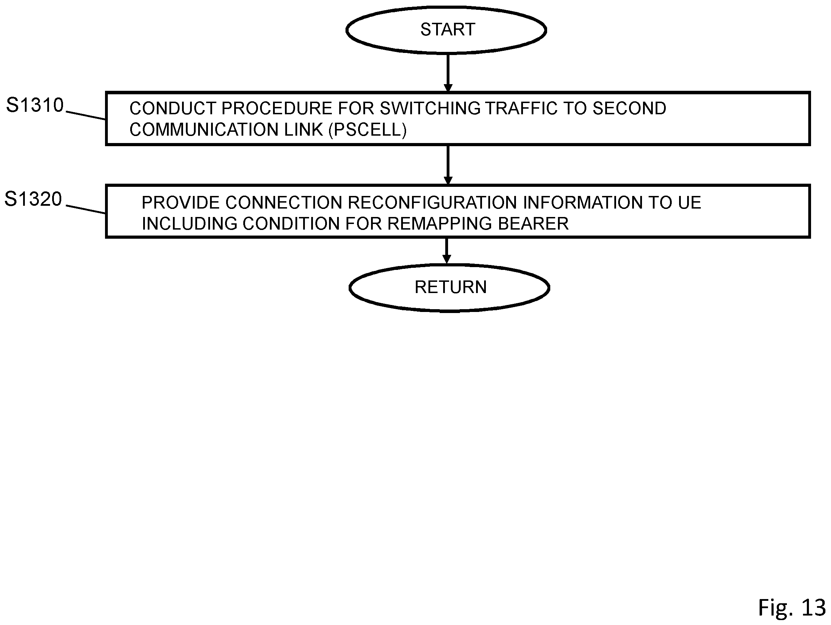

Fig. 13 shows a flow chart of a process executed by a communication network control element or function acting as MN, such as gNB 20 of Fig. 1, as described in the examples of Figs. 11 and 12. That is, Fig. 13 shows a flowchart related to a process conducted by a communication network control element or function, such as the gNB 20, which controls, as a MN, a multi-connectivity (e.g. DC based) communication of a communication element or function (i.e. UE) in a communication network in which at least two communication links are used to at least two different cells (PCell and PSCell, for example), one of which being controlled by the communication network control element or function (as the MN) and to which a first communication link being established.

As also indicated above, the communication network may be based on a 3GPP standard. However, also other communication standards can be used, according to other examples of embodiments.

In S1310, a process for switching at least a part of traffic (e.g. bearers) from the first communication link (to PCell) to a second communication link (to PSCell) when a specified condition is met is conducted.

In S1320 a connection reconfiguration information set regarding the modification of the first and second communication links is provided to the communication element or function (i.e. the UE). The connection reconfiguration information set includes information indicating a condition for remapping at least one specified bearer from the first communication link to the second communication link.

According to some examples of embodiments, as the condition for remapping the at least one specified bearer from the first communication link to the second communication link, it is defined that a specified measurement event is met which is associated with a measurement for at least one of the first communication link and the second communication link.

Furthermore, according to some examples of embodiments, when conducting the process for switching at least a part of traffic from the first communication link to the second communication link when a specified condition is met, a modification request is provided to a second communication network control element or function (e.g. SN) controlling another cell (PSCell) to which the second communication link is established. The modification request is for adding at least one bearer to the second communication link and includes information indicating the condition for remapping the at least one specified bearer from the first communication link to the second communication link.

Then, according to examples of embodiments, a response to the modification request is received from the second communication network control element (the SN) and processed. The response includes at least one of a measurement result related to the condition for remapping the at least one specified bearer and an indication as to whether the condition is met or not. Then, it can be decided on the basis of the content of the response as to whether an immediate activation of a bearer remapping at the communication element or function is to be initiated, or a conditional bearer remapping based on the condition in the connection reconfiguration information is to be initiated.

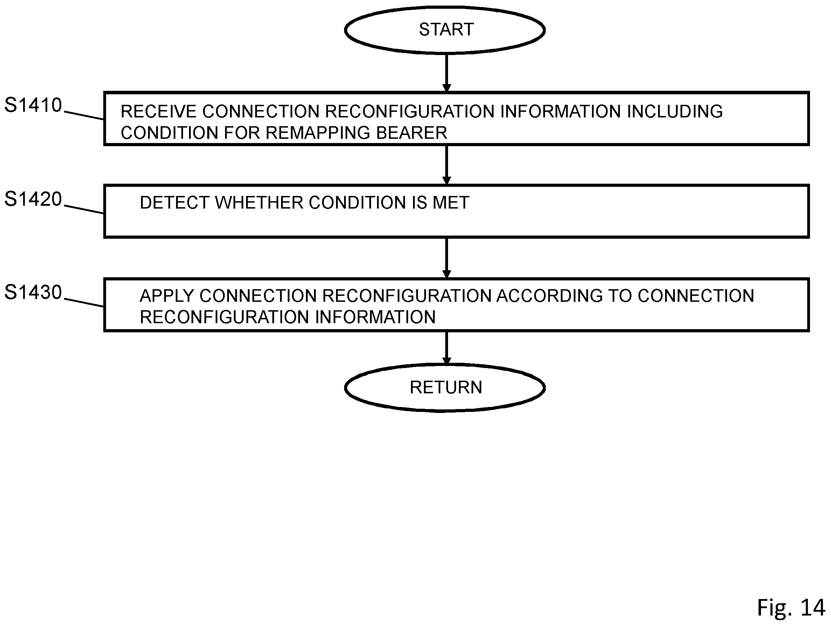

Fig. 14 shows a flow chart of a process executed by a communication element or function, such as UE10 of Fig. 1, as described in the examples of Figs. 11 and 12. That is, Fig. 14 shows a flowchart related to a process conducted by a communication element or function, such as the UE 10, which conducts a multi-connectivity (e.g. DC based) communication in a communication network in which at least two communication links are used to at least two different cells (PCell and PSCell) controlled by at least one communication network control element or function (acting as MN and SN).

As also indicated above, the communication network may be based on a 3GPP standard. However, also other communication standards can be used, according to other examples of embodiments.

In S1410, a connection reconfiguration information set regarding a modification of the first and second communication links is received from a communication network control element or function controlling the cell to which a first communication link is established (e.g. from the MN). The connection reconfiguration information set includes information indicating a condition for remapping at least one specified bearer from the first communication link to the second communication link,

In S1420, it is detected whether the condition for remapping the at least one specified bearer from the first communication link to the second communication link is met.

For example, according to examples of embodiments, as the condition for remapping the at least one specified bearer from the first communication link to the second communication link, it is detected whether a specified measurement event is met which is associated with a measurement for at least one of the first communication link and the second communication link.

In S1430, a connection reconfiguration is applied at the first and second communication links according to the connection reconfiguration information set when it is detected that the condition is met.

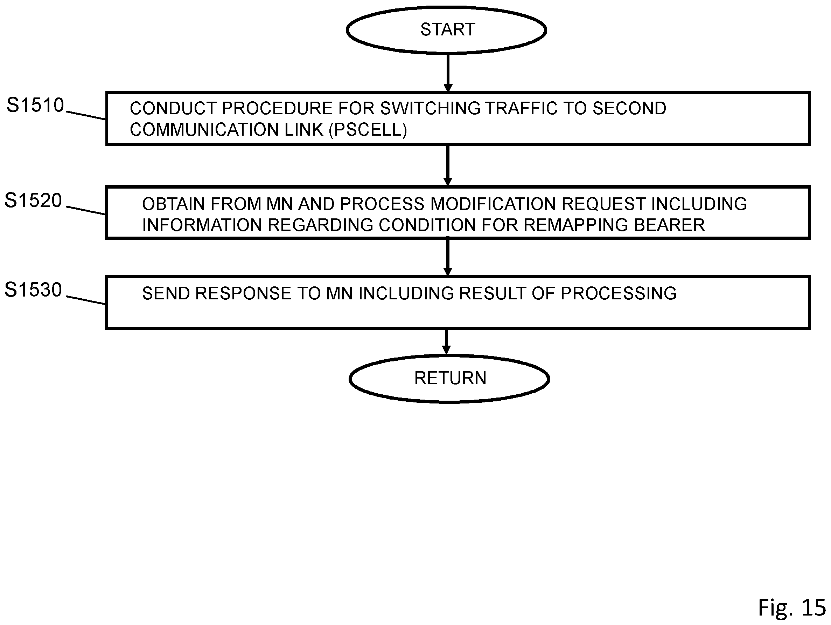

Fig. 15 shows a flow chart of a process executed by a communication network control element or function acting as SN, such as gNB 30 of Fig. 1, as described in the examples of Figs. 11 and 12. That is, Fig. 15 shows a flowchart related to a process conducted by a communication network control element or function, such as the gNB 30, which controls a multi-connectivity (e.g. DC based) communication of a communication element or function (i.e. UE) in a communication network in which at least two communication links are used to at least two different cells (PCell and PSCell), at least one of which (i.e. the PSCell) being controlled by the communication network control element or function (SN) and to which a second communication link being established.

As also indicated above, the communication network may be based on a 3GPP standard. However, also other communication standards can be used, according to other examples of embodiments.

In S1510, a process for switching at least a part of traffic from the first communication link to the second communication link when a specified condition is met is conducted.

In S1520, a modification request for adding at least one bearer to the second communication link is obtained from a first communication network control element or function (i.e. the MN) controlling another cell (i.e. the PCell) to which the first communication link is established, and processed. The modification request includes information indicating the condition for remapping the at least one specified bearer from the first communication link to the second communication link.

According to examples of embodiments, the process includes at least one of configuring a measurement on the second communication link related to the condition for remapping the at least one specified bearer and checking whether the condition is met or not.

In S1530, a response to the modification request is sent to the first communication network control element or function, wherein the response includes a result of the process.

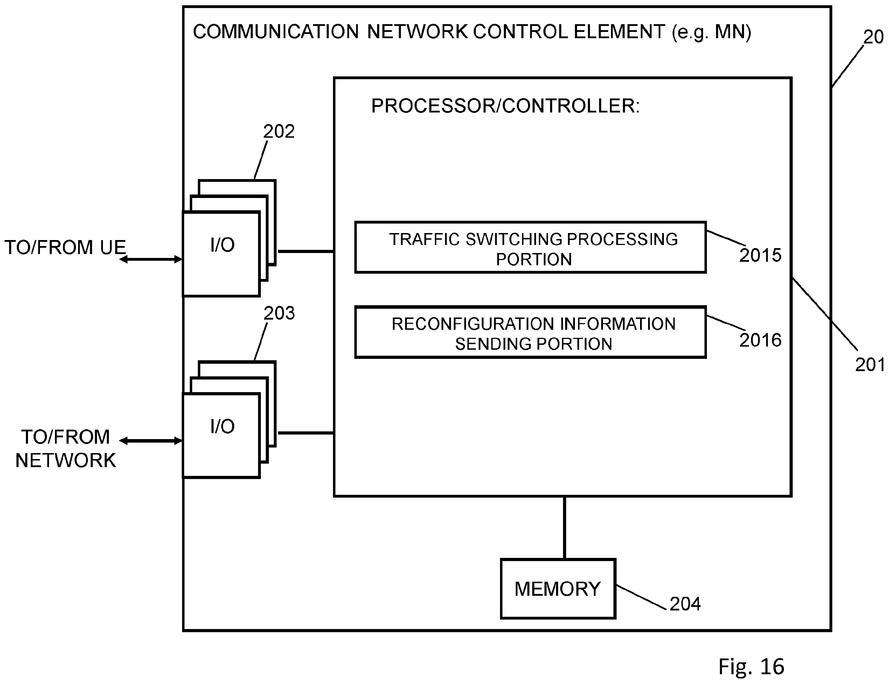

Fig. 16 shows a diagram of a network element or function representing a communication network control element or function acting as MN, such as gNB1 20, according to some examples of embodiments, as described in connection with Figs. 1, 11 and 12, which is configured to conduct a control of a multi-connectivity communication of a communication element or function in a communication network according to examples of embodiments of the disclosure. It is to be noted that the network element or function, like the gNB may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The communication network control element or function 20 shown in Fig. 16 may include a processing circuitry, a processing function, a control unit or a processor 201, such as a CPU or the like, which is suitable for executing instructions given by programs or the like related to the control procedure. The processor 201 may include one or more processing portions or functions dedicated to specific processes as described below, or the process may be run in a single processor or processing function. Portions for executing such specific processes may be also provided as discrete elements or within one or more further processors, processing functions or processing portions, such as in one physical processor like a CPU or in one or more physical or virtual entities, for example. Reference sign 202 and 203 denote input/output (I/O) units or functions (interfaces) connected to the processor or processing function 201. The I/O units 202 may be used for communicating with a communication element or function, such as UE 10. The I/O units 203 may be used for communicating with network parts located on the communication network (e.g. other gNBs, the core network etc.). The I/O units 202 and 203 may be combined units including communication equipment towards several entities, or may include a distributed structure with a plurality of different interfaces for different entities. Reference sign 204 denotes a memory usable, for example, for storing data and programs to be executed by the processor or processing function 201 and/or as a working storage of the processor or processing function 201. It is to be noted that the memory 204 may be implemented by using one or more memory portions of the same or different type of memory.

The processor or processing function 201 is configured to execute processes related to the above described control process. In particular, the processor or processing circuitry or function 201 includes at least one or more of the following sub-portions. Sub-portion 2015 is a processing portion which is usable as a portion for conducting a traffic switching process. The portion 2015 may be configured to perform a process according to S1310 of Fig. 13. Furthermore, the processor or processing circuitry or function 201 may include a sub-portion 2016 usable as a portion for providing reconfiguration information. The portion 2016 may be configured to perform a process according to S1320 of Fig. 13.

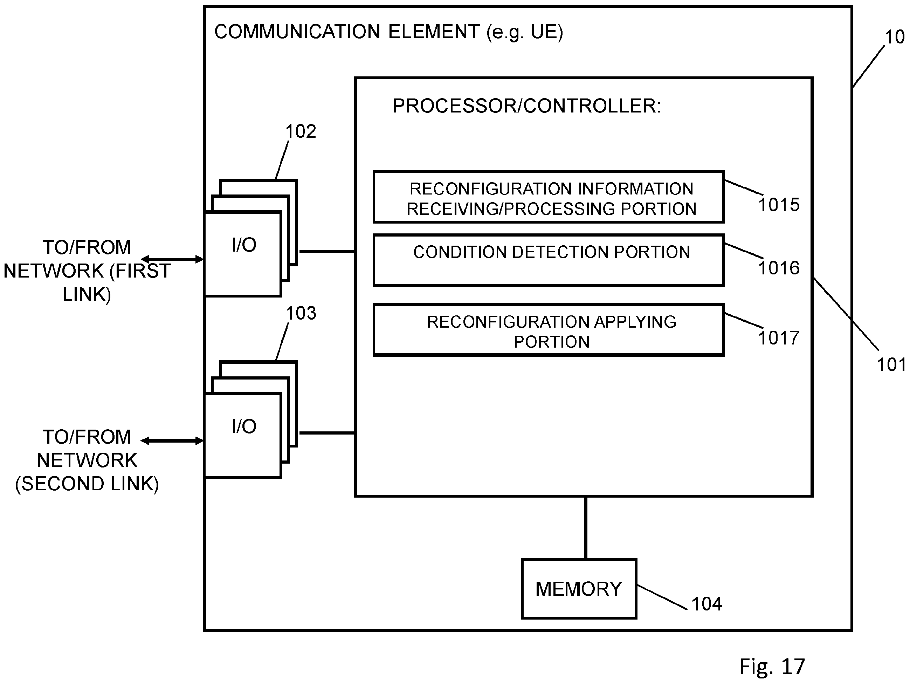

Fig. 17 shows a diagram of a communication element or function, such as UE 10, according to some examples of embodiments, as described in connection with Figs. 1, 11 and 12, which is configured to conduct a multi-connectivity communication according to examples of embodiments of the disclosure. It is to be noted that the network element or function, like the UE 10, may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The communication element or function 10 shown in Fig. 17 may include a processing circuitry, a processing function, a control unit or a processor 101, such as a CPU or the like, which is suitable for executing instructions given by programs or the like related to the control procedure. The processor 101 may include one or more processing portions or functions dedicated to specific processes as described below, or the process may be run in a single processor or processing function. Portions for executing such specific processes may be also provided as discrete elements or within one or more further processors, processing functions or processing portions, such as in one physical processor like a CPU or in one or more physical or virtual entities, for example. Reference sign 102 and 103 denote input/output (I/O) units or functions (interfaces) connected to the processor or processing function 101. The I/O units 102 may be used for communicating with the communication network via a first communication link (e.g. to PCell, as shown in Fig. 1, for example). The I/O units 103 may be used for communicating with the communication network via a second communication link (e.g. to PSCell, as shown in Fig. 1, for example). The I/O units 102 and 103 may be combined units including communication equipment towards several entities, or may include a distributed structure with a plurality of different interfaces for different entities. Reference sign 104 denotes a memory usable, for example, for storing data and programs to be executed by the processor or processing function 101 and/or as a working storage of the processor or processing function 101. It is to be noted that the memory 104 may be implemented by using one or more memory portions of the same or different type of memory.

The processor or processing function 101 is configured to execute processes related to the above described control process. In particular, the processor or processing circuitry or function 101 includes one or more of the following sub-portions. Sub-portion 1015 is a processing portion which is usable as a portion for receiving and processing reconfiguration information. The portion 1015 may be configured to perform a process according to S1410 of Fig. 14. Furthermore, the processor or processing circuitry or function 101 may include a sub-portion 1016 usable as a portion for detecting whether a condition is met. The portion 1016 may be configured to perform a process according to S1420 of Fig. 14. In addition, the processor or processing circuitry or function 101 may include a sub-portion 1017 usable as a portion for applying a reconfiguration. The portion 1017 may be configured to perform a process according to S1430 of Fig. 14.

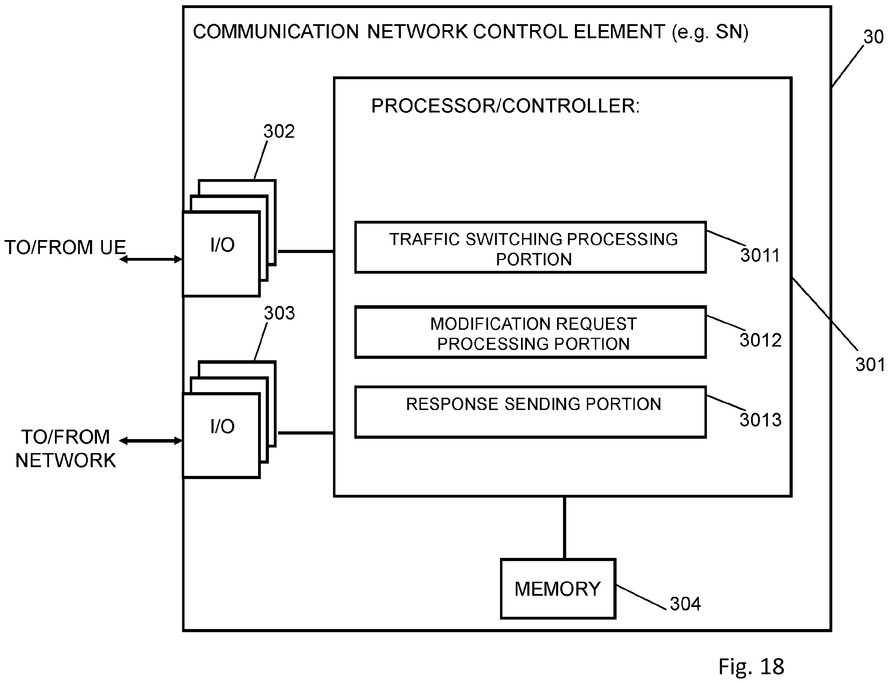

Fig. 18 shows a diagram of a network element or function representing a communication network control element or function acting as SN, such as gNB2 30, according to some examples of embodiments, as described in connection with Figs. 1, 11 and 12, which is configured to conduct a control of a multi-connectivity communication of a communication element or function in a communication network according to examples of embodiments of the disclosure. It is to be noted that the network element or function, like the gNB may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The communication network control element or function 30 shown in Fig. 18 may include a processing circuitry, a processing function, a control unit or a processor 301, such as a CPU or the like, which is suitable for executing instructions given by programs or the like related to the control procedure. The processor 301 may include one or more processing portions or functions dedicated to specific processes as described below, or the process may be run in a single processor or processing function. Portions for executing such specific processes may be also provided as discrete elements or within one or more further processors, processing functions or processing portions, such as in one physical processor like a CPU or in one or more physical or virtual entities, for example. Reference sign 302 and 303 denote input/output (I/O) units or functions (interfaces) connected to the processor or processing function 301. The I/O units 302 may be used for communicating with a communication element or function, such as UE 10. The I/O units 303 may be used for communicating with network parts located on the communication network (e.g. other gNBs, the core network etc.). The I/O units 302 and 303 may be combined units including communication equipment towards several entities, or may include a distributed structure with a plurality of different interfaces for different entities. Reference sign 304 denotes a memory usable, for example, for storing data and programs to be executed by the processor or processing function 301 and/or as a working storage of the processor or processing function 301. It is to be noted that the memory 304 may be implemented by using one or more memory portions of the same or different type of memory.

The processor or processing function 301 is configured to execute processes related to the above described control process. In particular, the processor or processing circuitry or function 301 includes at least one or more of the following sub-portions. Sub-portion 3011 is a processing portion which is usable as a portion for conducting a traffic switching process. The portion 3011 may be configured to perform a process according to S1510 of Fig. 15. Furthermore, the processor or processing circuitry or function 301 may include a sub-portion 3012 usable as a portion for processing a modification request. The portion 3012 may be configured to perform a process according to S1520 of Fig. 15. In addition, the processor or processing circuitry or function 301 may include a sub-portion 3013 usable as a portion for sending a response. The portion 3013 may be configured to perform a process according to S1530 of Fig. 15.

It is to be noted that principles, elements and functions discussed above in connection with embodiments related to Figs. 5 to 10 can be also combined with measures discussed above in connection with embodiments related to Figs. 11 to 18.

For example, according to some further examples of embodiments, elements and functions, such as the MN and the UE, which are configured to apply the measures according to the embodiments related to Figs. 5 to 10 can apply, when the multi-connectivity communication is established between the UE and the network, measures discussed in connection with Figs. 11 to 18 for modifying the established connection.

For example, when referring to Fig. 7, the MN can conduct, at a timing after S720 and when a multi-connectivity communication is established in the communication network in which at least two communication links are used to at least two different cells controlled by at least one communication network control element or function, a process for switching at least a part of traffic from the first communication link to a second communication link when a specified condition is met. In this case, a (further) connection reconfiguration information set regarding the modification of the first and second communication links is provided to the communication element or function (the UE). The (further) connection reconfiguration information set includes information indicating a condition for remapping at least one specified bearer from the first communication link to the second communication link.

According to further examples of embodiments, in this case, as the condition for remapping the at least one specified bearer from the first communication link to the second communication link, it is defined that a specified measurement event is met which is associated with a measurement for at least one of the first communication link and the second communication link.

Moreover, according to examples of embodiments, the MN provides, when conducting the process for switching at least a part of traffic from the first communication link to the second communication link when a specified condition is met, to a second communication network control element or function (e.g. SN) controlling another cell (PSCell) to which the second communication link is established, a modification request for adding at least one bearer to the second communication link. The modification request includes information indicating the condition for remapping the at least one specified bearer from the first communication link to the second communication link.

Then, a response to the modification request is received from the second communication network control element, and processed. The response includes at least one of a measurement result related to the condition for remapping the at least one specified bearer and an indication as to whether the condition is met or not. On the basis of the content of the response, the MN can decide as to whether an immediate activation of a bearer remapping at the communication element or function is to be initiated or a conditional bearer remapping based on the condition in the connection reconfiguration information is to be initiated.

Similarly, when referring to Fig. 8, the UE can receive, at a timing after S820 and when a multi-connectivity communication is established in the communication network in which at least two communication links are used to at least two different cells controlled by at least one communication network control element or function, from a communication network control element or function controlling the cell to which the first communication link is established (i.e. from the MN, for example), a (further) connection reconfiguration information set regarding a modification of the first and second communication links. The (further) connection reconfiguration information set includes information indicating a condition for remapping at least one specified bearer from the first communication link to the second communication link.,

Then, the UE detects, as the condition for remapping the at least one specified bearer from the first communication link to the second communication link, whether a specified measurement event is met which is associated with a measurement for at least one of the first communication link and the second communication link. When it is detected that the condition is met, the UE applies a connection reconfiguration at the first and second communication links according to the (further) connection reconfiguration information set.

As described above, by means of the measures discussed in the examples of embodiments, it is possible, in case of conducting an SN addition procedure, to employ a reconfiguration procedure in a multi-connectivity communication where a conditional reconfiguration procedure for bearers to a primary and secondary cell can be achieved while traffic flow interruption is avoided and signaling load is minimized.

Furthermore, in case of conducting an SN modification procedure, a procedure is proposed which allows to reduce signaling overhead and reduce delay in the SN modification procedure.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

According to a further example of embodiments, there is provided, for example, an apparatus for use by a communication element or function configured to conduct a communication in a communication network, the apparatus comprising means configured to receive, from a communication network control element or function controlling a primary cell for a first communication link forming a communication path of the communication element or function, and process configuration information related to a conditional secondary cell addition procedure for establishing, in addition to the first communication link, a second communication link to a secondary cell, wherein the configuration information includes a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link, and means configured to conduct the conditional secondary cell addition procedure according to the received configuration information.

Furthermore, according to some other examples of embodiments, the above defined apparatus may further comprise means for conducting at least one of the processes defined in the above described methods, for example a method according to that described in connection with Fig 8 and also Fig. 14.

According to a further example of embodiments, there is provided, for example, an apparatus for use by an apparatus for use by a communication network control element or function configured to control a communication of a communication element or function in a communication network, the apparatus comprising means configured to conduct a conditional secondary cell addition procedure for establishing, in addition to a first communication link to a primary cell being controlled by the communication network control element or function forming a communication path of the communication element or function, a second communication link to a secondary cell, means configured to send, to the communication element or function, a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link.

Furthermore, according to some other examples of embodiments, the above defined apparatus may further comprise means for conducting at least one of the processes defined in the above described methods, for example a method according to that described in connection with Fig 7 and also Fig. 13.

According to a further example of embodiments, there is provided, for example, an apparatus for use by a communication network control element or function configured to control a multi-connectivity communication of a communication element or function in a communication network in which at least two communication links are used to at least two different cells at least one of which being controlled by the communication network control element or function and to which a second communication link being established, the apparatus comprising means configured to conduct a process for switching at least a part of traffic from a first communication link to the second communication link when a specified condition is met, means configured to obtain, from a first communication network control element or function controlling another cell to which the first communication link is established, and process a modification request for adding at least one bearer to the second communication link, the modification request including information indicating the condition for remapping the at least one specified bearer from the first communication link to the second communication link, wherein the process includes at least one of conducting a measurement on the second communication link related to the condition for remapping the at least one specified bearer and checking whether the condition is met or not, and means configured to send, to the first communication network control element or function, a response to the modification request, the response including a result of the process.

Furthermore, according to some other examples of embodiments, the above defined apparatus may further comprise means for conducting at least one of the processes defined in the above described methods, for example a method according to that described in connection with Fig 15.

According to a further example of embodiments, there is provided, for example, a non-transitory computer readable medium comprising program instructions for causing an apparatus to perform, when conducting a communication in a communication network, receiving, from a communication network control element or function controlling a primary cell for a first communication link forming a communication path of the communication element or function, and processing configuration information related to a conditional secondary cell addition procedure for establishing, in addition to the first communication link, a second communication link to a secondary cell, wherein the configuration information includes a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link, and conducting the conditional secondary cell addition procedure according to the received configuration information.

According to a further example of embodiments, there is provided, for example, a non-transitory computer readable medium comprising program instructions for causing an apparatus to perform, when controlling a communication of a communication element or function in a communication network, conducting a conditional secondary cell addition procedure for establishing, in addition to a first communication link to a primary cell being controlled by the communication network control element or function forming a communication path of the communication element or function, a second communication link to a secondary cell, sending, to the communication element or function, a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the process, or one or more processing sections or processing portions may be used and shared in the process, wherein one physical processor or more than one physical processor may be used for implementing one or more processing portions dedicated to specific processes as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

Although the present disclosure has been described herein before with reference to particular embodiments thereof, the present disclosure is not limited thereto and various modifications can be made thereto.

## Claims

1. An apparatus for use by a communication element or function configured to conduct a communication in a communication network, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to receive, from a communication network control element or function controlling a primary cell for a first communication link forming a communication path of the communication element or function, configuration information related to a conditional secondary cell addition procedure for establishing, in addition to the first communication link, a second communication link to a secondary cell, and to process the configuration information,
wherein the configuration information includes a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link, and
to conduct the conditional secondary cell addition procedure according to the received configuration information.

2. The apparatus according to claim 1, wherein the connection reconfiguration information set includes
a first connection reconfiguration setting for the conditional secondary cell addition procedure, wherein the first connection reconfiguration setting is to be applied when the execution condition of the conditional secondary cell addition procedure is determined to be met, and
a second connection reconfiguration setting for bearers to be remapped to the second communication link, wherein the second connection reconfiguration setting is different to the first connection reconfiguration setting and is to be applied when the second communication link is established,
wherein the at least one memory and the instructions are further configured to, with the at least one processing circuitry, cause the apparatus at least:
to apply the first connection reconfiguration setting when the execution condition of the conditional secondary cell addition procedure is determined to be met, and
to apply the second connection reconfiguration setting when the second communication link is established.

3. The apparatus according to claim 2, wherein the at least one memory and the instructions are further configured to, with the at least one processing circuitry, cause the apparatus at least:
to apply the second connection reconfiguration setting, according to the remapping condition controlling the timing for remapping the at least one specified bearer from the first communication link to the second communication link, at one of
a point of time immediately after the second communication link is established,
a predetermined time after the second communication link is established,
a predetermined time after the second communication link is established and a predetermined communication condition is met during the predetermined time, and
a point of time when it is determined that a measurement result concerning at least one of the first communication link and the second communication link meets a predetermined value after the second communication link is established.

4. The apparatus according to claim 1, wherein the connection reconfiguration information set includes
a single connection reconfiguration setting for the conditional secondary cell addition procedure, wherein the single connection reconfiguration setting indicates at least one bearer which is to be maintained at the first communication link when the execution condition of the conditional secondary cell addition procedure is determined to be met and to be remapped to the second communication link when the second communication link is established
wherein the at least one memory and the instructions are further configured to, with the at least one processing circuitry, cause the apparatus at least:
to maintain the at least one bearer at the first communication link when the execution condition of the conditional secondary cell addition procedure is determined to be met and
to remap the at least one bearer to the second communication link when the second communication link is established.

5. The apparatus according to claim 1, wherein, when the communication element or function has a dual active protocol stack capability, the connection reconfiguration information set includes
a dual active protocol stack connection reconfiguration setting for bearers to be used for dual active protocol stack operation, wherein the dual active protocol stack connection reconfiguration setting indicates at least one bearer which is to be maintained at the first communication link when the execution condition of the conditional secondary cell addition procedure is determined to be met and to be remapped to the second communication link when the second communication link is established,
wherein the at least one memory and the instructions are further configured to, with the at least one processing circuitry, cause the apparatus at least:
to maintain the at least one bearer at the first communication link when the execution condition of the conditional secondary cell addition procedure is determined to be met and
to remap the at least one bearer to the second communication link when the second communication link is established.

6. The apparatus according to claim 4 or 5, wherein the at least one memory and the instructions are further configured to, with the at least one processing circuitry, cause the apparatus at least:
to remap the at least one bearer to the second communication link, according to the remapping condition controlling the timing for remapping the at least one specified bearer from the first communication link to the second communication link, at one of
a point of time immediately after the second communication link is established,
a predetermined time after the second communication link is established,
a predetermined time after the second communication link is established and a predetermined communication condition is met during the predetermined time, and
a point of time when it is determined that a measurement result concerning at least one of the first communication link and the second communication link meets a predetermined value after the second communication link is established.

7. The apparatus according to any of claims 1 to 6, wherein the at least one memory and the instructions are further configured to, with the at least one processing circuitry, cause the apparatus at least:
to send, to the communication network control element or function, a first connection reconfiguration complete message indicating that a connection reconfiguration setting is applied when the execution condition of the conditional secondary cell addition procedure is determined to be met, and
to send, to the communication network control element or function, a second connection reconfiguration complete message indicating that a connection reconfiguration setting for remapping the at least one specified bearer from the first communication link to the second communication link is applied when the second communication link is established.

8. The apparatus according to any of claims 1 to 7, wherein the at least one memory and the instructions are further configured to, with the at least one processing circuitry, cause the apparatus at least:
when a multi-connectivity communication is established in the communication network in which at least two communication links are used to at least two different cells controlled by at least one communication network control element or function, to receive, from a communication network control element or function controlling the cell to which the first communication link is established, a further connection reconfiguration information set regarding a modification of the first and second communication links, wherein the further connection reconfiguration information set includes information indicating a condition for remapping at least one specified bearer from the first communication link to the second communication link,
to detect, as the condition for remapping the at least one specified bearer from the first communication link to the second communication link, whether a specified measurement event is met which is associated with a measurement for at least one of the first communication link and the second communication link, and
to apply a connection reconfiguration at the first and second communication links according to the further connection reconfiguration information set when it is detected that the condition is met.

9. A method for use in a communication element or function configured to conduct a communication in a communication network, the method comprising
receiving, from a communication network control element or function controlling a primary cell for a first communication link forming a communication path of the communication element or function, configuration information related to a conditional secondary cell addition procedure for establishing, in addition to the first communication link, a second communication link to a secondary cell, and processing the configuration information,
wherein the configuration information includes a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link, and
conducting the conditional secondary cell addition procedure according to the received configuration information.

10. An apparatus for use by a communication network control element or function configured to control a communication of a communication element or function in a communication network, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to conduct a conditional secondary cell addition procedure for establishing, in addition to a first communication link to a primary cell being controlled by the communication network control element or function forming a communication path of the communication element or function, a second communication link to a secondary cell,
to send, to the communication element or function, a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link.

11. The apparatus according to claim 10, wherein the at least one memory and the instructions are further configured to, with the at least one processing circuitry, cause the apparatus at least:
when the second communication link is established, to conduct a process for switching at least a part of traffic from the first communication link to a second communication link when a specified condition is met,
to provide, to the communication element or function, a connection reconfiguration information set regarding the modification of the first and second communication links, wherein the connection reconfiguration information set includes information indicating a condition for remapping at least one specified bearer from the first communication link to the second communication link.

12. The apparatus according to claim 11, wherein the at least one memory and the instructions are further configured to, with the at least one processing circuitry, cause the apparatus at least:
to define, as the condition for remapping the at least one specified bearer from the first communication link to the second communication link, a specified measurement event to be met which is associated with a measurement for at least one of the first communication link and the second communication link, and/or
to provide, when conducting the process for switching at least a part of traffic from the first communication link to the second communication link when a specified condition is met, to a second communication network control element or function controlling another cell to which the second communication link is established, a modification request for adding at least one bearer to the second communication link, the modification request including information indicating the condition for remapping the at least one specified bearer from the first communication link to the second communication link,
to receive, from the second communication network control element, and process a response to the modification request, the response including at least one of a measurement result related to the condition for remapping the at least one specified bearer and an indication as to whether the condition is met or not, and
to decide, on the basis of the content of the response, whether to initiate an immediate activation of a bearer remapping at the communication element or function or to initiate a conditional bearer remapping based on the condition in the connection reconfiguration information.

13. A method for use in a communication network control element or function configured to control a communication of a communication element or function in a communication network, the method comprising
conducting a conditional secondary cell addition procedure for establishing, in addition to a first communication link to a primary cell being controlled by the communication network control element or function forming a communication path of the communication element or function, a second communication link to a secondary cell,
sending, to the communication element or function, a connection reconfiguration information set regarding the establishment of the second communication link, wherein the connection reconfiguration information set includes information indicating an execution condition of the conditional secondary cell addition procedure and information indicating a remapping condition controlling a timing for remapping at least one specified bearer from the first communication link to the second communication link.

14. An apparatus for use by a communication network control element or function configured to control a multi-connectivity communication of a communication element or function in a communication network in which at least two communication links are used to at least two different cells at least one of which being controlled by the communication network control element or function and to which a second communication link being established, the apparatus comprising
at least one processing circuitry, and
at least one memory for storing instructions to be executed by the processing circuitry,
wherein the at least one memory and the instructions are configured to, with the at least one processing circuitry, cause the apparatus at least:
to conduct a process for switching at least a part of traffic from a first communication link to the second communication link when a specified condition is met,
to obtain, from a first communication network control element or function controlling another cell to which the first communication link is established, and process a modification request for adding at least one bearer to the second communication link, the modification request including information indicating the condition for remapping the at least one specified bearer from the first communication link to the second communication link,
wherein the process includes at least one of conducting a measurement on the second communication link related to the condition for remapping the at least one specified bearer and checking whether the condition is met or not, and
to send, to the first communication network control element or function, a response to the modification request, the response including a result of the process.
